# EUROPEAN PATENT APPLICATION

(11) **EP 4 797 500 A1**
(43) Date of publication of application: **26.08.2026**
(21) Application number: 24890811.3
(22) Date of filing: 15.11.2024
(51) Int. Cl.: H02J 50/90

(54) **WIRELESS CHARGING METHOD, ELECTRONIC DEVICE, AND COMPUTER READABLE MEDIUM**

(30) Priority: 17.11.2023 CN 202311540813; 17.11.2023 CN 202311541047; 08.12.2023 CN 202311688098; 27.12.2023 CN 202311828504
(71) Applicant: Locking Technology (Beijing) Co., Ltd., Beijing 100094 (CN)
(72) Inventor: LI, Weihua, Beijing 100094 (CN); LI, Tao, Beijing 100094 (CN); LUO, Yifei, Beijing 100094 (CN); TANG, Hao, Beijing 100094 (CN); CHEN, Bin, Beijing 100094 (CN)
(74) Representative: Wang, Bo
(86) International application number: PCT/CN2024/132302
(87) International publication number: WO 2025/103459

(57) **Abstract**

A method for wireless charging protection is provided. The method includes detecting a battery capacity of a smart security device, and sending a charging start instruction to a wireless charging device; determining whether the wireless charging device sends an energy shutoff notification; and in response to determining that the wireless charging device does not send the energy shutoff notification, executing a security detection task, and sending a charging stop instruction to the wireless charging device according to a detection result corresponding to the security detection task to cause the wireless charging device to stop emitting energy, thereby achieving security detection during a wireless charging process of the smart security device. Simultaneously, when a human body detection sensor detects that a human body is approaching, energy emission is immediately stopped, so as to ensure that the energy does not irradiate the human body, avoiding harm to the human body. This optimizes the protection strategy for wireless charging and improves safety during the wireless charging process.

## Description

### CROSS-REFERENCE TO RELATED APPLICATIONS

This application claims priority to Chinese Patent Application No. 202311540813.5, filed on November 17, 2023, Chinese Patent Application No. 202311541047.4, filed on November 17, 2023, Chinese Patent Application No. 202311688098.X, filed on December 8, 2023, and Chinese Patent Application No. 202311828504.8, filed on December 27, 2023, the entire contents of each of which are incorporated herein by reference.

### TECHNICAL FIELD

The present disclosure relates to the field of wireless charging, and in particular to a method, an electronic device, and a non-transitory computer-readable storage medium for wireless charging.

### BACKGROUND

With the development of electronic technology, more and more electronic products have entered people's lives, such as smart door locks. A smart door lock often includes a plurality of electrical loads inside, such as a fingerprint recognition module, a radio frequency identification module, a Bluetooth module, an image acquisition module, or the like. Therefore, a stable power supply is required for the smart door lock. Most existing charging methods for the smart door lock are battery power supply or laser wireless power supply.

Long-distance laser wireless charging technology typically involves a transmitter emitting a laser light to a receiver disposed on a smart device. The receiver converts the laser light into electrical energy to provide longer battery life for the smart device. This technology is also widely used in various industries, such as smart homes.

The above information disclosed in the Background section is only for enhancing the understanding of the background of the concept of the present disclosure concept, and therefore, the above information may include information that does not constitute prior art already known to a person of ordinary skill in the art in this country.

### SUMMARY

A main objective of the present disclosure is to provide a method for wireless charging, an electronic device, and a non-transitory computer-readable storage medium, to achieve improvement of a wireless charging effect of a smart device.

In a first aspect, the present disclosure relates to a method for wireless charging. The method includes detecting a battery capacity of a smart security device, and sending a charging start instruction to a wireless charging device; determining whether the wireless charging device sends an energy shutoff notification; and in response to determining that the wireless charging device does not send the energy shutoff notification, executing a security detection task, and sending a charging stop instruction to the wireless charging device according to a detection result corresponding to the security detection task to cause the wireless charging device to stop emitting energy.

In some embodiments, the detecting a battery capacity of a smart security device and sending a charging start instruction to a wireless charging device includes: determining the battery capacity of the smart security device; and in response to determining that the battery capacity is less than or equal to a first preset battery capacity, sending the charging start instruction to the wireless charging device.

In some embodiments, the in response to determining that the wireless charging device does not send the energy shutoff notification, executing a security detection task, and sending a charging stop instruction to the wireless charging device according to a detection result corresponding to the security detection task includes: in response to a switching event of the smart security device triggered by a human body, detecting a switching state of the smart security device; and in response to determining that the switching state of the smart security device is an on state, sending the charging stop instruction to the wireless charging device.

In some embodiments, the in response to determining that the wireless charging device does not send the energy shutoff notification, executing a security detection task, and sending a charging stop instruction to the wireless charging device according to a detection result corresponding to the security detection task includes: receiving at least one of a voltage signal or a current signal sent by the wireless charging device; determining whether the voltage signal is within a preset voltage range or whether the current signal is within a preset current range; and in response to determining that the voltage signal is not within the preset voltage range or the current signal is not within the preset current range, sending the charging stop instruction to the wireless charging device.

In some embodiments, the in response to determining that the wireless charging device does not send the energy shutoff notification, executing a security detection task, and sending a charging stop instruction to the wireless charging device according to a detection result corresponding to the security detection task includes: determining whether the battery capacity of the smart security device reaches a second preset battery capacity; and in response to determining that the battery capacity reaches the second preset battery capacity, sending the charging stop instruction to the wireless charging device. The second preset battery capacity is greater than the first preset battery capacity.

In a second aspect, the present disclosure relates to a method for wireless charging, the method includes: receiving a charging start instruction sent by a smart security device; in response to receiving the charging start instruction, emitting energy to charge a battery of the smart security device, and performing a human body detection within an energy radiation region corresponding to the energy; and in response to a human body being detected, stopping emitting the energy, and sending an energy shutoff notification to the smart security device.

In some embodiments, the method further includes: in response to no human body being detected, determining whether the smart security device sends a charging stop instruction, and in response to determining that the smart security device sends the charging stop instruction, stopping emitting the energy in response to the charging stop instruction.

In some embodiments, the method further includes: controlling an associated transmitter to perform a laser start operation based on target wireless charging start information; performing a current detection on each photoelectric conversion component in an associated photoelectric conversion component set to obtain a current information set corresponding to the photoelectric conversion component set. Each photoelectric conversion component in the photoelectric conversion component set is disposed on the transmitter; determining whether each piece of current information in the current information set satisfies a preset charging condition; and in response to determining that each piece of current information in the current information set satisfies the preset charging condition, controlling the transmitter to perform a wireless charging operation on an associated receiver.

In some embodiments, the method further includes: in response to determining that each piece of current information in the current information set does not satisfy the preset charging condition, controlling a laser to move to a preset position; controlling the laser to perform a first movement operation based on a preset movement information sequence, and performing a first real-time current detection on each photoelectric conversion component in the photoelectric conversion component set to obtain first real-time current information corresponding to the photoelectric conversion component set, wherein each piece of preset movement information in the preset movement information sequence includes a preset movement direction and a preset movement distance; in response to determining that the detected first real-time current information corresponding to any photoelectric conversion component satisfies a preset first real-time charging condition, controlling the laser to perform a second movement operation based on a target movement information sequence, and performing a second real-time current detection on each photoelectric conversion component in the photoelectric conversion component set to obtain second real-time current information corresponding to the photoelectric conversion component set, wherein each piece of target movement information in the target movement information sequence includes a target movement direction and a target movement distance, and the target movement distance included in any target movement information is less than the preset movement distance included in any preset movement information; and in response to determining that each piece of the detected second real-time current information corresponding to each photoelectric conversion component satisfies a preset second real-time charging condition, controlling the transmitter to perform the wireless charging operation.

In some embodiments, the in response to determining that the detected first real-time current information corresponding to any photoelectric conversion component satisfies a preset first real-time charging condition, controlling the laser to perform a second movement operation based on a target movement information sequence, and performing a second real-time current detection on each photoelectric conversion component in the photoelectric conversion component set to obtain second real-time current information corresponding to the photoelectric conversion component set includes: in response to determining that the detected first real-time current information corresponding to any photoelectric conversion component satisfies the preset first real-time charging condition, determining a location identifier corresponding to the any photoelectric conversion component; determining the target movement information sequence based on the location identifier; and controlling the laser to perform the second movement operation based on the target movement information sequence, and performing the second real-time current detection on each photoelectric conversion component in the photoelectric conversion component set to obtain the second real-time current information corresponding to the photoelectric conversion component set.

In some embodiments, after controlling the transmitter to perform the wireless charging operation on the associated receiver in a case where each piece of current information in the current information set satisfies the preset charging condition, the method further includes: determining whether an object exists within a target region by performing an object detection on the target region using an associated object detection sensor. The target region includes a region corresponding to an emission path of the transmitter; and in response to determining that an object exists within the target region, controlling the transmitter to stop the wireless charging operation.

In some embodiments, after controlling the transmitter to perform the wireless charging operation on the associated receiver in a case where each piece of current information in the current information set satisfies the preset charging condition, the method further includes: in response to that a door unlocking operation corresponding to an associated smart door lock is detected, controlling the transmitter to stop the wireless charging operation.

In some embodiments, the controlling an associated transmitter to perform a laser start operation based on target wireless charging start information includes: determining whether a remaining battery capacity of an associated smart door lock is less than or equal to a preset battery capacity warning threshold; in response to determining that the remaining battery capacity of the smart door lock is less than or equal to the preset battery capacity warning threshold, generating battery capacity warning information based on the remaining battery capacity; sending the battery capacity warning information to an associated terminal device; and in response to receiving the target wireless charging start information sent by the terminal device, controlling the associated transmitter to perform the laser start operation.

In some embodiments, the method further includes: detecting whether a preset charging condition is satisfied; in response to determining that the preset charging condition is satisfied, emitting a laser light to a laser receiving end at an initial emission power; in response to a first command fed back by the laser receiving end according to power adjustment information, performing a reduction process on an emission power according to a preset adjustment strategy; or in response to a second command fed back by the laser receiving end according to the power adjustment information, stopping emitting the laser light to the laser receiving end. The power adjustment information includes at least a current battery capacity of a smart device where the laser receiving end is located.

In some embodiments, the detecting whether a preset charging condition is satisfied includes at least one of: detecting whether a position alignment between a laser emitting end and the laser receiving end has been completed; detecting whether a living being exists within a predetermined region of the laser emitting end; or detecting whether a current battery capacity of the laser receiving end is lower than a first battery capacity threshold. In a case where the position alignment has been completed, the living being does not exist within the predetermined region, and the current battery capacity is lower than the first battery capacity threshold, it is determined that the preset charging condition is satisfied.

In some embodiments, the in response to a first command fed back by the laser receiving end according to power adjustment information, performing a reduction process on an emission power according to a preset adjustment strategy includes: after receiving the first command, acquiring real-time charging information, historical usage data, and a current user count, wherein the real-time charging information includes a current battery capacity and a current time; determining a target emission power according to a relationship between the current user count and a preset user count, and emitting the laser light to the laser receiving end at the target emission power; or determining the target emission power by comparing the current battery capacity and the current time with the historical usage data, and emitting the laser light to the laser receiving end at the target emission power. The target emission power is lower than the initial emission power.

In some embodiments, after emitting the laser light to the laser receiving end based on the initial emission power in a case where the preset charging condition is satisfied, the method further includes: during emitting the laser light, periodically detecting whether the living being exists within the predetermined region of the laser emitting end according to a preset time period; and in a case where the living being is detected to exist, stopping emitting the laser light to the laser receiving end.

In some embodiments, the wireless charging device includes: a wireless emitting device, an infrared laser emitting device, and a laser sensor, the laser sensor is integrated on a smart door lock, an optical component is integrated on a surface of the laser sensor. Before controlling an associated transmitter to perform a laser start operation based on target wireless charging start information, the method further includes: in response to receiving a calibration instruction, controlling the infrared laser emitting device to scan a preset region; in response to determining that the infrared laser emitting device has scanned the optical component, recording a position of the scanned optical component; controlling the infrared laser emitting device to emit an infrared laser beam to the optical component to obtain optical indication information, and acquiring a relative position of light according to the optical indication information; and controlling the infrared laser emitting device to rotate based on the relative position of light, so that the infrared laser beam is emitted to a central position corresponding to the optical indication information.

In some embodiments, the controlling the infrared laser emitting device to emit an infrared laser beam to the optical component includes: constructing a three-dimensional spatial coordinate system with a central position where the infrared laser emitting device is installed as an origin center; determining transmitter three-dimensional coordinates of an current emission hole of the infrared laser emitting device; determining optical component three-dimensional coordinates corresponding to the central position of the optical component; controlling the infrared laser emitting device to emit the infrared laser beam in a direction of the optical component three-dimensional coordinates, with a point represented by the transmitter three-dimensional coordinates as a starting emission point.

In some embodiments, the controlling the infrared laser emitting device to rotate based on the relative position of light includes: calculating a horizontal offset angle of the infrared laser beam according to a horizontal offset amount comprised in the relative position of light; calculating a vertical offset angle of the infrared laser beam according to a vertical offset amount comprised in the relative position of light; controlling the infrared laser emitting device to rotate according to the horizontal offset angle and the vertical offset angle.

In a third aspect, the present disclosure relates to an electronic device. The device includes: one or more processors; and a storage device having one or more programs stored thereon. When the one or more programs are executed by the one or more processors, the one or more processors are caused to implement the method above.

In a fourth aspect, the present disclosure relates to a non-transitory computer-readable storage medium. The medium has a computer program stored thereon. When the program is executed by a processor, the method above is implemented.

Beneficial effects of the present disclosure are as follows: by detecting a battery capacity of a smart security device, and sending a charging start instruction to a wireless charging device; determining whether the wireless charging device sends an energy shutoff notification; and in response to determining that the wireless charging device does not send the energy shutoff notification, executing a security detection task, and sending a charging stop instruction to the wireless charging device according to a detection result corresponding to the security detection task to cause the wireless charging device to stop emitting energy, thereby achieving security detection during a wireless charging process of the smart security device. Simultaneously, when a human body detection sensor detects that a human body is approaching, energy emission is immediately stopped, so as to ensure that the energy does not irradiate the human body, avoiding harm to the human body. This optimizes the protection strategy for wireless charging and improves safety during the wireless charging process. The technical effects of improving charging efficiency, reducing resource waste, and enhancing safety during the wireless charging process are thereby achieved.

### BRIEF DESCRIPTION OF THE DRAWINGS

The accompanying drawings, which constitute a part of the present disclosure, are used for providing further understanding of the present disclosure. The accompanying drawings make other features, objectives, and advantages of the present disclosure more apparent. The schematic drawings and descriptions of embodiments of the present disclosure are used for explaining the present disclosure and do not constitute an improper limitation to the present disclosure. In the drawings:
FIG. 1 is a schematic flowchart illustrating a method for wireless charging protection according to some embodiments of the present disclosure;
FIG. 2 is another schematic flowchart illustrating a method for wireless charging protection according to some embodiments of the present disclosure;
FIG. 3 is a schematic diagram illustrating a method for wireless charging protection on a smart security device side according to some embodiments of the present disclosure;
FIG. 4 is another schematic flowchart illustrating a method for wireless charging protection according to some embodiments of the present disclosure;
FIG. 5 is a schematic diagram illustrating a method for wireless charging protection on a wireless charging device side according to some embodiments of the present disclosure;
FIG. 6 is a schematic diagram illustrating a structure of a wireless charging protection device according to some embodiments of the present disclosure;
FIG. 7 is another schematic diagram illustrating a structure of a wireless charging protection device according to some embodiments of the present disclosure;
FIG. 8 is another schematic flowchart illustrating a method for wireless charging protection according to some embodiments of the present disclosure;
FIG. 9 is a schematic diagram illustrating a hardware structure of a wireless charging device according to some embodiments of the present disclosure;
FIG. 10 is a flowchart illustrating a method for laser wireless charging of a smart device according to some embodiments of the present disclosure;
FIG. 11 is a schematic diagram illustrating an interaction process for wireless charging according to some embodiments of the present disclosure;
FIG. 12 is a schematic diagram illustrating a laser wireless charging device of a smart device according to some embodiments of the present disclosure;
FIG. 13 is another schematic diagram illustrating a laser wireless charging device of a smart device according to an embodiment of the present disclosure;
FIG. 14 is a schematic diagram illustrating an application scenario of an infrared charging device for a smart door lock in a method for wireless charging alignment according to some embodiments of the present disclosure; and
FIG. 15 is a flowchart illustrating a method for wireless charging alignment according to some alternative embodiments of the present disclosure.

### DETAILED DESCRIPTION

It should be noted that, in the case of no conflict, the embodiments in the present disclosure and the features in the embodiments may be combined with each other. The present disclosure is described in detail below with reference to the accompanying drawings and in combination with embodiments.

Providing continuous and stable power support is crucial for the normal use and performance of a smart security device (e.g., a smart door lock). In related technologies, using energy for wireless charging of the smart security device is an effective manner. Using a wireless charging device may achieve long-distance and high-power wireless charging, thereby providing sufficient energy for the smart security device. However, it should be noted that the energy emission power is relatively large during a wireless charging process. Therefore, high-power energy emission may pose safety risks during the charging process.

As a result, in view of the problems in the above-mentioned prior art, the present disclosure proposes a method for wireless charging. The method includes detecting a battery capacity of a smart security device, and sending a charging start instruction to a wireless charging device; determining whether the wireless charging device sends an energy shutoff notification; and in response to determining that the wireless charging device does not send the energy shutoff notification, executing a security detection task, and sending a charging stop instruction to the wireless charging device according to a detection result corresponding to the security detection task to cause the wireless charging device to stop emitting energy, thereby achieving security detection during a wireless charging process of the smart security device. Simultaneously, when a human body detection sensor detects that a human body is approaching, energy emission is immediately stopped, so as to ensure that the energy does not irradiate the human body, avoiding harm to the human body. This optimizes the protection strategy for wireless charging and improves safety during the wireless charging process.

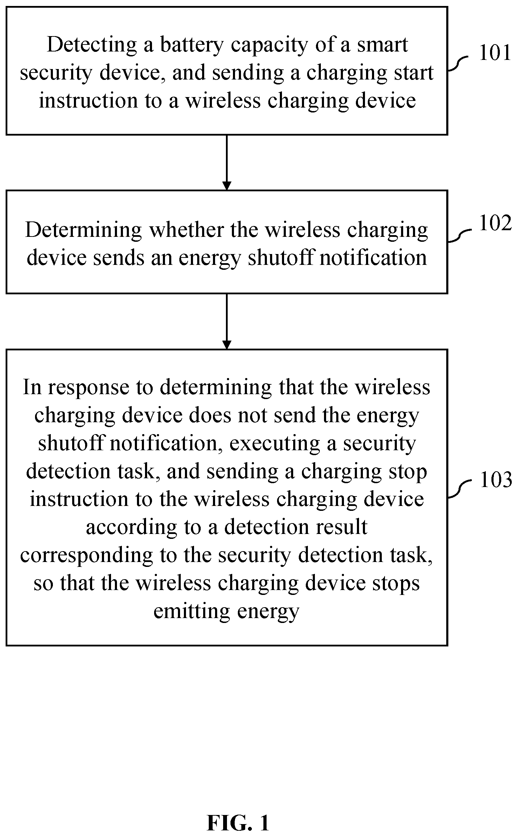

FIG. 1 is a schematic flowchart illustrating a method for wireless charging protection according to some embodiments of the present disclosure. As shown in FIG. 1, the method is applied to a smart security device. The smart security device may be a smart door lock, a smart camera, a smart alarm system, or other smart security devices capable of wireless charging. In the present disclosure, the smart door lock is used as an example. The method includes the following steps.

In step 101, a battery capacity of a smart security device is detected, and a charging start instruction is sent to a wireless charging device.

In an implementation of the present disclosure, the smart security device may determine the battery capacity of the smart security device according to a smart door lock control unit in the smart security device. According to the determined current battery capacity, the smart security device determines whether to send the charging start instruction to the wireless charging device.

The charging start instruction is used to instruct the wireless charging device to emit energy. The wireless charging device includes a receiving end and an emitting end. The charging start instruction may instruct the emitting end of the wireless charging device to emit energy to provide energy for the receiving end of the wireless charging device. The receiving end of the wireless charging device is configured to receive the energy emitted by the emitting end of the wireless charging device and convert the energy provided by the emitting end into electrical energy. The receiving end of the wireless charging device may be connected to the battery of the smart security device to charge the battery of the current smart security device.

In step 102, whether the wireless charging device sends an energy shutoff notification is determined.

In an embodiment of the present disclosure, because both an energy emission control unit of the emitting end of the wireless charging device and the smart door lock control unit of the smart security device include a wireless communication unit, the smart door lock control unit may establish a communication connection with the energy emission control unit to implement communication interaction between the smart security device and the wireless charging device.

Therefore, the smart door lock control unit in the smart security device may determine whether the energy emission control unit of the emitting end of the wireless charging device sends the energy shutoff notification.

In step 103, in response to determining that the wireless charging device does not send the energy shutoff notification, a security detection task is executed, and a charging stop instruction is sent to the wireless charging device according to a detection result corresponding to the security detection task to cause the wireless charging device to stop emitting energy.

In an embodiment of the present disclosure, if the energy emission control unit does not send the energy shutoff notification, the smart security device executes the security detection task. For example, the smart door lock control unit in the smart security device may execute the security detection task.

The security detection task may include detecting a switching state of the smart security device, determining whether a voltage signal and/or a current signal is abnormal, and determining whether the battery is fully charged.

Therefore, according to the embodiment of the present disclosure, by detecting a battery capacity of a smart security device, and sending a charging start instruction to a wireless charging device; determining whether the wireless charging device sends an energy shutoff notification; and in response to determining that the wireless charging device does not send the energy shutoff notification, executing a security detection task, and sending a charging stop instruction to the wireless charging device according to a detection result corresponding to the security detection task to cause the wireless charging device to stop emitting energy, thereby achieving security detection during a wireless charging process of the smart security device. Simultaneously, when a human body detection sensor detects that a human body is approaching, energy emission is immediately stopped, so as to ensure that the energy does not irradiate the human body, avoiding harm to the human body. This optimizes the protection strategy for wireless charging and improves safety during the wireless charging process.

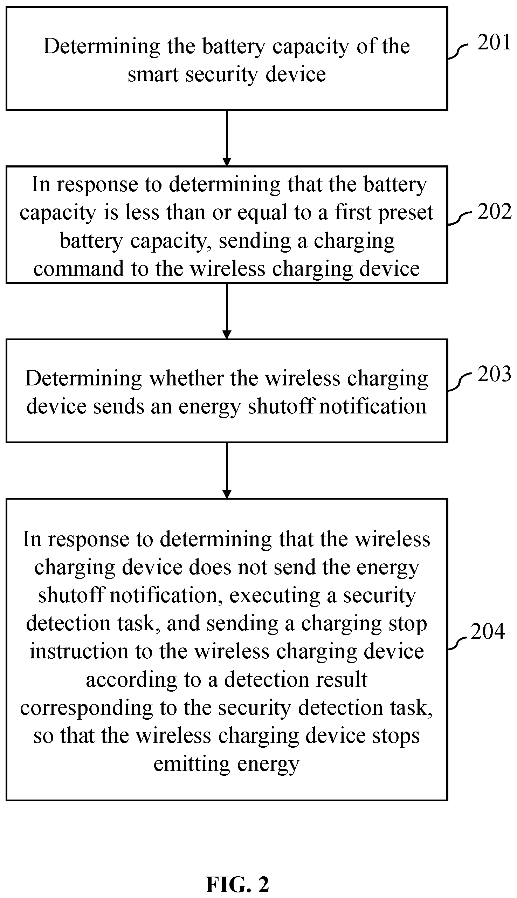

FIG. 2 is another schematic flowchart illustrating a method for wireless charging protection according to some embodiments of the present disclosure. FIG. 2 further defines step 101 based on the embodiment shown in FIG. 1. In the embodiment shown in FIG. 2, step 101 includes step 201 and step 202. As shown in FIG. 2, the method includes the following steps.

In step 201, the battery capacity of the smart security device is determined.

In some embodiments of the present disclosure, the smart door lock control unit in the smart security device determines a current battery capacity of the smart security device.

In step 202, in response to determining that the battery capacity is less than or equal to a first preset battery capacity, the charging start instruction is sent to the wireless charging device.

In some embodiments of the present disclosure, if the current battery capacity is less than or equal to the first preset battery capacity, the smart security device determines that the current battery needs to be charged. At this time, the smart door lock control unit in the smart security device sends the charging start instruction to the energy emission control unit of the emitting end of the wireless charging device.

The first preset battery capacity may be set according to actual situations, which is not limited in the embodiments of the present disclosure.

In step 203, whether the wireless charging device sends an energy shutoff notification is determined.

Step 203 has the same or similar function as the above-mentioned step 102. The implementation of step 203 may be the above-mentioned embodiment and is not repeated here.

In step 204, in response to determining that the wireless charging device does not send the energy shutoff notification, a security detection task is executed, and a charging stop instruction is sent to the wireless charging device according to a detection result corresponding to the security detection task to cause the wireless charging device to stop emitting energy.

In some embodiments of the present disclosure, if the energy emission control unit of the emitting end of the wireless charging device does not send the energy shutoff notification, the smart door lock control unit of the smart security device executes the security detection task and sends the charging stop instruction to the energy emission control unit according to the detection result corresponding to the security detection task.

The detection result, corresponding to sending the charging stop instruction to the energy emission control unit, is that a switching state of a current smart security device is an on state, a voltage signal or a current signal received by the current smart security device is abnormal, or the current battery is fully charged.

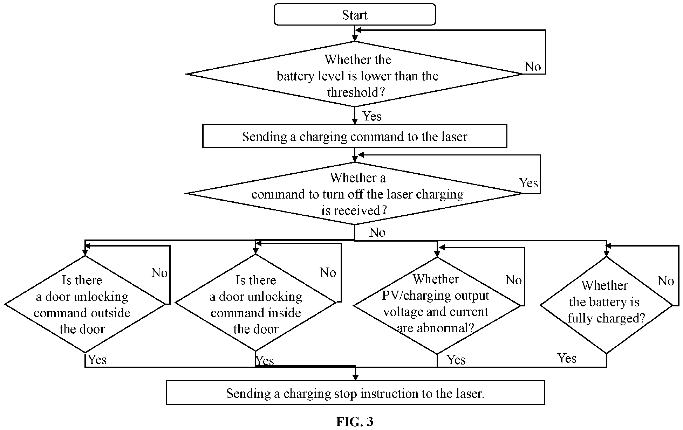

FIG. 3 is a schematic diagram illustrating a method for wireless charging protection on a smart security device side according to some embodiments of the present disclosure. The wireless charging device of the present disclosure may be a laser charging device or an electromagnetic charging device. FIG. 3 uses a laser in the laser charging device as an example.

In an optional embodiment of the present disclosure, in response to a switching event of the smart security device triggered by a human body, a switching state of the smart security device is detected; and in response to determining that the switching state of the smart security device is an on state, the charging stop instruction is sent to the wireless charging device. In some embodiments, when the human body triggers the switching event of the smart security device, i.e., someone opens the door from outside or inside, the smart door lock control unit in the smart security device immediately sends a charging stop instruction to the energy emission control unit of the laser charging device to instruct the energy emission control unit of the laser charging device to control a laser driver to drive the laser to stop emitting laser light. This ensures that the laser is turned off before the door is opened from outside or inside, thereby protecting the human body.

In an optional embodiment of the present disclosure, a voltage signal and/or a current signal sent by the wireless charging device is received; whether the voltage signal is within a preset voltage range and/or whether the current signal is within a preset current range is determined; and in response to determining that the voltage signal is not within the preset voltage range or the current signal is not within the preset current range, the charging stop instruction is sent to the wireless charging device. In some embodiments, because the smart door lock control unit is connected to a photovoltaic battery voltage unit and a charging unit of the receiving end of the laser charging device, respectively, the smart door lock control unit may receive the voltage signal and/or the current signal output by the photovoltaic battery voltage unit and the charging unit in real time. During the laser charging process, once the smart door lock control unit monitors that a current voltage signal or a current signal is not within the preset voltage range or the preset current range, the smart door lock control unit determines that the current voltage signal or the current signal is abnormal. At this time, the smart door lock control unit in the smart security device immediately sends the charging stop instruction to the energy emission control unit of the laser charging device to instruct the energy emission control unit to control the laser driver to drive the laser to stop emitting laser light.

In an optional embodiment of the present disclosure, whether the battery capacity of the smart security device reaches a second preset battery capacity is determined. The second preset battery capacity is greater than the first preset battery capacity, and in response to determining that the battery capacity reaches the second preset battery capacity, the charging stop instruction is sent to the wireless charging device. In some embodiments, when the smart door lock control unit detects that the battery capacity reaches the second preset battery capacity, the smart door lock control unit determines that the current battery is fully charged. The smart door lock control unit in the smart security device immediately sends the charging stop instruction to the energy emission control unit of the laser charging device to instruct the energy emission control unit to control the laser driver to drive the laser to stop emitting laser light.

In summary, according to the embodiments of the present disclosure, energy is used to achieve wireless charging of the smart security device. The wireless charging does not require additional cables or connectors, which makes the charging process more concise and convenient, the charging efficiency is greatly improved, and the charging time is shortened. At the same time, safety detection is performed during the wireless charging to add a protection manner. When the human body is detected to be approaching, or the battery is fully charged, energy emission is stopped immediately. The immediate stop reduces power consumption and ensures that the energy does not irradiate the human body. In particular, when laser charging is used, damage to human eyes can be avoided.

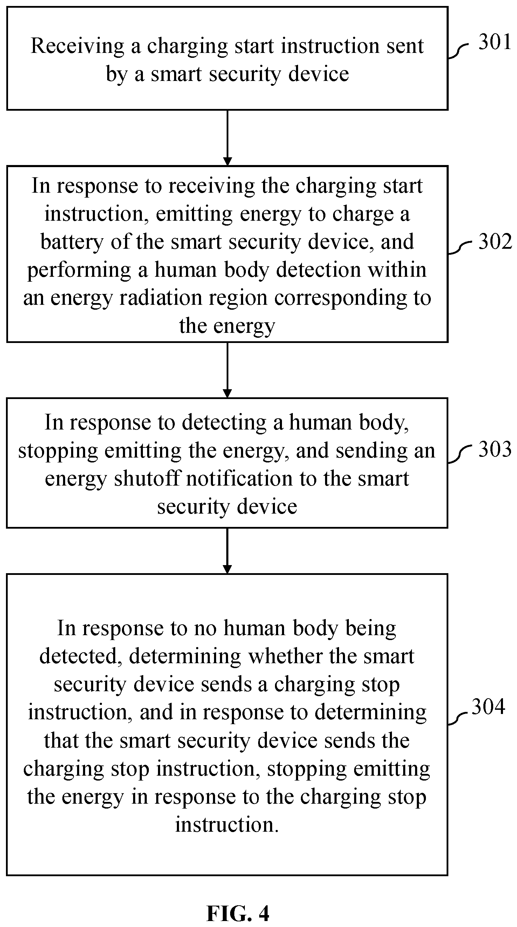

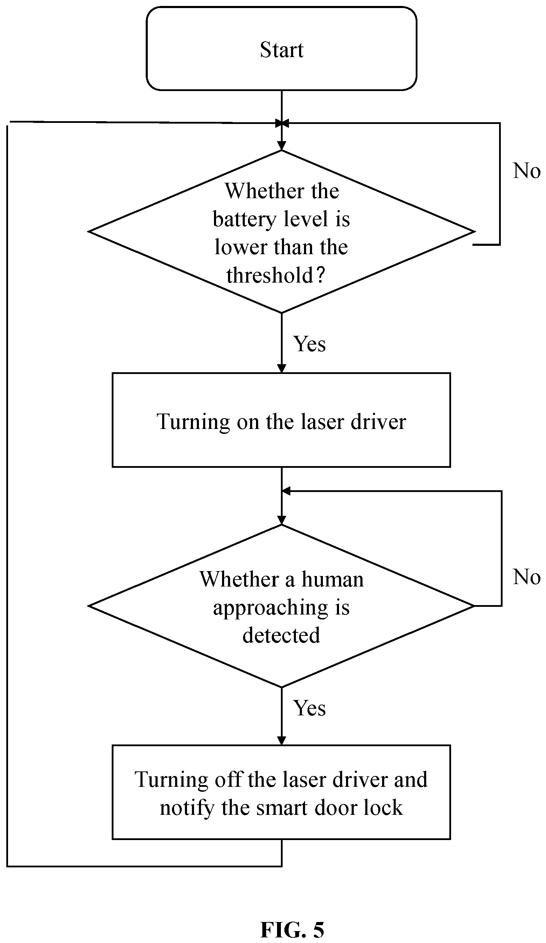

FIG. 4 is another schematic flowchart illustrating a method for wireless charging protection according to some embodiments of the present disclosure. FIG. 5 is a schematic diagram of a method for wireless charging protection on a wireless charging device side, taking a laser in a laser charging device as an example of the wireless charging device, according to the present disclosure. As shown in FIG. 4, the method is applied to a wireless charging device. The method may be applied to an emitting end in the wireless charging device. The method includes the following steps.

In step 301, a charging start instruction sent by a smart security device is received.

In some embodiments of the present disclosure, because both the emitting end in the wireless charging device and the smart security device include a wireless communication unit, an energy emission control unit may receive the charging start instruction sent by a smart door lock control unit in the smart security device through the wireless communication unit.

A receiving end of the wireless charging device may be located on a side of the smart security device or integrated into the smart security device. The emitting end of the wireless charging device is located on a side away from the smart security device.

In step 302, in response to receiving the charging start instruction, energy is emitted to charge a battery of the smart security device, and a human body detection is performed within an energy radiation region corresponding to the energy.

In some embodiments of the present disclosure, the emitting end of the wireless charging device further includes a power supply unit, an emission driver (a laser driver), and an energy emitter (a laser). The power supply unit may provide electrical energy to the energy emission control unit. The energy emission control unit may control the laser driver to drive the laser to emit energy (laser light energy) according to the charging start instruction.

The receiving end of the wireless charging device is connected to a side of the smart security device. The receiving end includes an energy conversion unit (a photovoltaic cell unit), a boost unit, and a charging unit. The energy conversion unit may receive the energy emitted by the emitting end and convert the energy into electrical energy. The boost unit may increase a lower voltage output by the photovoltaic cell unit to a required higher voltage to provide sufficient energy for the charging unit. The charging unit is configured to connect to the battery of the smart security device to supply power to the battery.

In addition, the energy emission control unit is connected to a human body sensing sensor to detect whether a human body approaches the emitting end.

The human body sensing sensor is configured to detect whether a human body approaches the emitting end and send an induction signal to the energy emission control unit of the emitting end (also referred to as a laser emitting end) according to a detection result. The human body sensing sensor may typically apply different technologies such as passive infrared (PIR), radar, ultrasonic, or time of flight (TOF). Principles and applications of these technologies are slightly different, but all of the technologies detect whether a human body approaches the emitting end by sending a signal and detecting a reflection or transmission time of the signal. When a human body approaches the emitting end, the human body sensing sensor detects a change in the signal, thereby triggering corresponding control logic.

In step 303, in response to a human body being detected, the emission of the energy is stopped, and an energy shutoff notification is sent to the smart security device.

In some embodiments of the present disclosure, when a human body approaches, the human body sensing sensor sends an induction signal to the energy emission control unit. The energy emission control unit starts the emission driver according to the induction signal to control the energy emitter, and the energy emitter is controlled to stop emitting the energy. The energy emission control unit sends the energy shutoff notification to the smart door lock control unit in the smart security device.

In addition, in some embodiments of the present disclosure, in response to no human body being detected, whether the smart security device sends a charging stop instruction is determined, and in response to determining that the smart security device sends the charging stop instruction, the emission of the energy is stopped in response to the charging stop instruction. In some embodiments, if the human body sensing sensor does not detect a human body, the energy emission control unit determines whether the smart door lock control unit of the smart security device sends the charging stop instruction. If the smart door lock control unit sends the charging stop instruction, the energy emission control unit controls the emission driver to drive the energy emitter of laser light to stop emitting the energy in response to the charging stop instruction.

In summary, in the embodiments of the present disclosure, by using the human body sensing sensor in the wireless charging device to perform real-time detection, and performing communication interaction with the smart security device, a human body protection manner is added during wireless charging. When the human body sensing sensor detects that a human body is approaching, the human body sensing sensor may immediately stop emitting the energy. The immediate stop ensures that the energy does not irradiate the human body, avoids causing harm to the human body, and improves safety during a laser charging process.

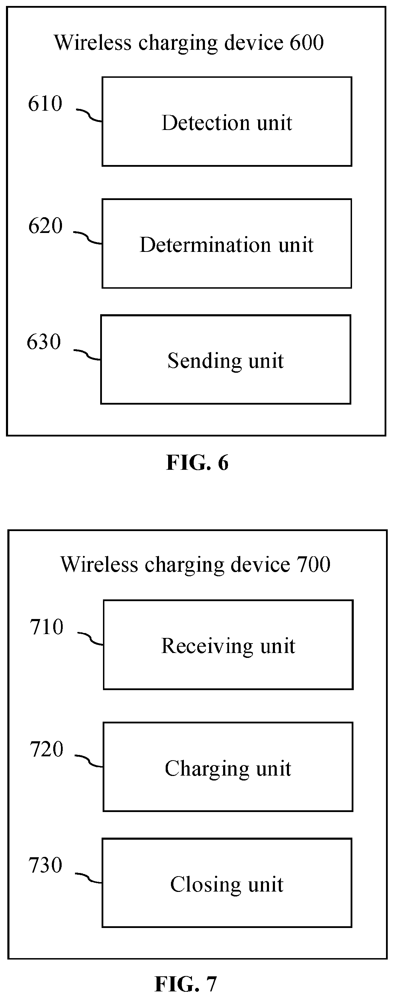

Corresponding to the method for wireless charging protection described above, the present disclosure further proposes a wireless charging protection device. FIG. 6 is a schematic diagram illustrating a structure of a wireless charging protection device 600 according to some embodiments of the present disclosure. As shown in FIG. 6, the device is applied to a smart security device. The device includes a detection unit 610, a determination unit 620, and a sending unit 630.

The detection unit 610 is configured to detect a battery capacity of the smart security device and send a charging start instruction to a wireless charging device.

The determination unit 620 is configured to determine whether the wireless charging device sends an energy shutoff notification.

The sending unit 630 is configured to, in response to the wireless charging device not sending the energy shutoff notification, execute a security detection task and send a charging stop instruction to the wireless charging device according to a detection result corresponding to the security detection task to cause the wireless charging device to stop emitting energy.

In some embodiments, the detection unit 610 is configured to: determine the battery capacity of the smart security device; in response to determining that the battery capacity is less than or equal to a first preset battery capacity, send the charging start instruction to the wireless charging device.

In some embodiments, the sending unit 630 is configured to: in response to a switching event of the smart security device triggered by a human body, detect a switching state of the smart security device; in response to determining that the switching state of the smart security device is an on state, send the charging stop instruction to the wireless charging device.

In some embodiments, the sending unit 630 is configured to: receive a voltage signal and/or a current signal sent by the wireless charging device; determine whether the voltage signal is within a preset voltage range and/or whether the current signal is within a preset current range; in response to determining that the voltage signal is not within the preset voltage range or the current signal is not within the preset current range, send the charging stop instruction to the wireless charging device.

In some embodiments, the sending unit 630 is configured to: determine whether the battery capacity of the smart security device reaches a second preset battery capacity. The second preset battery capacity is greater than the first preset battery capacity. The sending unit 630 is further configured to: in response to determining that the battery capacity reaches the second preset battery capacity, send the charging stop instruction to the wireless charging device.

Corresponding to the method for wireless charging protection described above, the present disclosure further proposes a wireless charging protection device. FIG. 7 is another schematic diagram illustrating a structure of a wireless charging protection device 700 according to some embodiments of the present disclosure. As shown in FIG. 7, the device is applied to a wireless charging device. The device includes a receiving unit 710, a charging unit 720, and a closing unit 730.

The receiving unit 710 is configured to receive a charging start instruction sent by a smart security device.

The charging unit 720 is configured to, in response to receiving the charging start instruction, emit energy to charge a battery of the smart security device and perform a human body detection within an energy radiation region corresponding to the energy.

The closing unit 730 is configured to, in response to a human body being detected, stop emitting energy and send an energy shutoff notification to a smart security device.

In some embodiments, the device 700 further includes a sending unit.

The sending unit is configured to, in response to no human body being detected, determine whether the smart security device sends a charging stop instruction, and in response to determining that the smart security device sends the charging stop instruction, stop emitting the energy in response to the charging stop instruction.

It should be noted that, since the device embodiments of the present disclosure correspond to the method embodiments described above, the explanations for the method embodiments are also applicable to the device embodiments. The principles are the same. For details not disclosed in the device embodiments, references may be made to the method embodiments described above, and details are not repeated in the present disclosure.

According to embodiments of the present disclosure, the present disclosure also provides an electronic device, a non-transitory computer-readable storage medium, and a computer program product.

The electronic device is intended to represent various forms of digital computers, such as laptop computers, desktop computers, workbenches, personal digital assistants, servers, blade servers, mainframe computers, and other suitable computers. The electronic device may also represent various forms of mobile devices, such as personal digital assistants, cellular phones, smart phones, wearable devices, and other similar computing devices. The components, connections, and relationships thereof, and functions thereof shown herein are merely examples, and are not intended to limit implementations of the present disclosure described and/or claimed herein.

The electronic device includes one or more processors and a storage device having one or more programs stored thereon. When the one or more programs are executed by the one or more processors, the one or more processors implement the method described above.

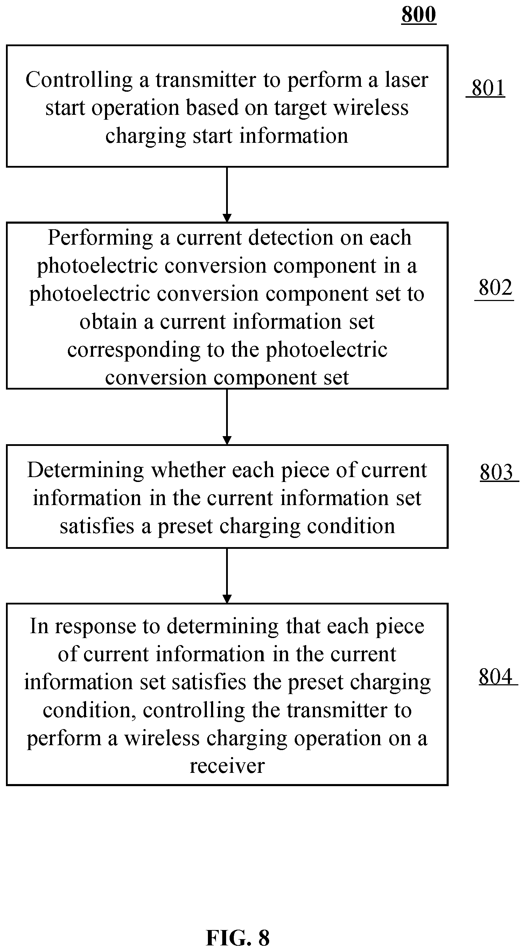

In some optional embodiments of the present disclosure, a method for wireless charging protection is provided. FIG. 8 shows a process 800 for wireless charging according to some embodiments of the present disclosure. The method for wireless charging includes the following steps.

In step 801, an associated transmitter is controlled to perform a laser start operation based on target wireless charging start information.

In some embodiments, an execution entity of the method for wireless charging (e.g., a wireless charging device) may control an associated transmitter to perform the laser start operation according to target wireless charging start information. The wireless charging device may include a transmitter and a receiver. The transmitter may be configured to perform a wireless charging operation. A photoelectric conversion component set may be disposed on the transmitter. The receiver may be configured to receive a laser light emitted by the transmitter and convert the optical energy of the laser light into electrical energy. A reflector set may be disposed on the receiver. Photoelectric conversion components in the photoelectric conversion component set may correspond one-to-one with reflectors in the reflector set. A count of photoelectric conversion components in the photoelectric conversion component set may be the same as a count of reflectors in the reflector set. As an example, the reflector set may include four reflectors. The photoelectric conversion component set may include four photoelectric conversion components. The four reflectors may be respectively disposed on four sides of the receiver. The four photoelectric conversion components may be respectively disposed on four sides of the transmitter. The receiver may also be configured to charge a smart door lock. The target wireless charging start information may be information characterizing the charging of the receiver. The target wireless charging start information may include a charging start time. For example, the target wireless charging start information may be "charge the receiver at 11:00". In practice, the execution entity may control the transmitter to turn on the laser at the charging start time included in the target wireless charging start information. In some embodiments, a laser driver included in the transmitter may drive the laser to emit a laser light.

In some optional implementations of some embodiments, the execution entity may control the associated transmitter to perform the laser start operation according to the target wireless charging start information by performing the following steps.

First, whether a remaining battery capacity of an associated smart door lock is less than or equal to a preset battery capacity warning threshold is determined. The associated smart door lock may be a smart door lock electrically connected to the receiver. The preset battery capacity warning threshold may be a preset battery capacity threshold for charging when the preset battery capacity threshold is less than or equal to the preset battery capacity warning threshold. For example, the preset battery capacity warning threshold may be 10%.

Second, in response to determining that the remaining battery capacity of the smart door lock is less than or equal to the preset battery capacity warning threshold, battery capacity warning information is generated based on the remaining battery capacity. The battery capacity warning information may be information to remind a user to charge. In practice, in response to determining that the remaining battery capacity of the smart door lock is less than or equal to the preset battery capacity warning threshold, the execution entity may fill the remaining battery capacity into a preset battery capacity warning information template to obtain the battery capacity warning information. The preset battery capacity warning information template may be "The remaining battery capacity of the smart door lock is XX. Please charge on time." An underscore is for filling in the remaining battery capacity.

Third, the battery capacity warning information is sent to an associated terminal device. The terminal device may be a smartphone. Here, a specific connection manner between the execution entity and the associated terminal device is not limited. As an example, the execution entity may be connected to the associated terminal device by a wire. As another example, the execution entity may also be wirelessly connected to the associated terminal device. It should be noted that the wireless connection manner may include, but is not limited to, 3G/4G connection, WiFi connection, Bluetooth connection, WiMAX connection, Zigbee connection, UWB (ultrawideband) connection, and other wireless connection manners currently known or developed in the future.

Fourth, in response to receiving the target wireless charging start information sent by the terminal device, the associated transmitter is controlled to perform the laser start operation. In practice, in response to receiving the target wireless charging start information sent by the terminal device, the execution entity may control the transmitter to turn on the laser at the charging start time included in the target wireless charging start information.

In some optional implementations of some embodiments, the execution entity may control the associated transmitter to perform the laser start operation according to the target wireless charging start information by performing the following steps.

In step 1, a real-time charging current detection is performed on an associated receiver to obtain real-time charging current information. The receiver may include a photovoltaic cell, a voltage regulation chip, and a lithium battery cell. The photovoltaic cell may be a solar cell. The voltage regulation chip may be configured to regulate a voltage in the photovoltaic cell to a voltage receivable by the lithium battery cell. The voltage regulation chip may be a boost chip. The voltage regulation chip and the lithium battery cell may be disposed on a receiving circuit board. The voltage regulation chip may be electrically connected to the photovoltaic cell and the lithium battery cell via wires, respectively, to transmit the battery capacity of the photovoltaic cell to the lithium battery cell. A current detection module may be connected to the photovoltaic cell. In practice, the current detection module may perform a real-time charging current detection on the photovoltaic cell included in the associated receiver to obtain real-time charging current information. The execution entity may store the detected real-time charging current information.

In step 2, a charging current difference is determined as an absolute value of a difference between the real-time charging current information and pre-stored previous charging current information. The pre-stored previous charging current information may be the pre-stored charging current corresponding to the receiver detected at a moment immediately preceding the current time. In practice, the execution entity may determine the charging current difference as an absolute value of a difference between a current value characterized by the real-time charging current information and a current value characterized by the pre-stored previous charging current information.

In step 3, in response to the charging current difference being greater than or equal to a preset charging current difference threshold, the laser is controlled to stop a wireless charging operation. The preset charging current difference threshold may be a charging current difference set in advance. The charging current difference being greater than or equal to the preset charging current difference threshold may be understood as the laser light emitted by the transmitter not being received by the receiver, causing the charging current of the receiver to decrease instantaneously. Therefore, in response to an instantaneous decrease being detected in the charging current of the receiver, it may determine that the laser light emitted by the transmitter is not received by the receiver, thereby turning off the laser for emission and further reducing waste of electrical resources.

In step 4, preset charging anomaly information is sent to an associated terminal device. The preset charging anomaly information may be information characterizing an anomaly in laser wireless charging. The associated terminal device may be a user's mobile phone. Therefore, the user may be alerted to the laser wireless charging anomaly, so as to prompt the user to restart wireless charging or inspect the laser or the receiver.

The first step to the fourth step serve as an inventive point of embodiments of the present disclosure, the second technical problem, i.e., "For laser wireless power supply, when an obstruction exists between the laser and the receiver, the laser still emits laser lights, but the laser lights cannot irradiate the receiver to charge the smart door lock, thereby further causing waste of electrical resources" mentioned in the background is addressed. The reason for further causing waste of electrical resources is as follows: for the laser wireless power supply, when an obstruction exists between the laser and the receiver, the laser still emits laser lights, but the laser lights cannot irradiate the receiver to charge the smart door lock. If the above factor is addressed, the waste of electrical resources can be further reduced. To achieve this effect, the present disclosure further includes: first, performing real-time charging current detection on the associated receiver to obtain real-time charging current information. Therefore, whether the receiver receives the laser light from the laser and performs photoelectric conversion may be determined. Second, the charging current difference is determined as the absolute value of the difference between the real-time charging current information and the pre-stored previous charging current information. Therefore, a current change of the photovoltaic cell is determined. Then, in response to the charging current difference being greater than or equal to the preset charging current difference threshold, the laser is controlled to stop the wireless charging operation. Therefore, in response to the instantaneous decrease in the charging current of the receiver being detected, it determines that the laser light emitted by the transmitter is not received by the receiver, thereby turning off the laser for emission and further reducing the waste of electrical resources. Finally, the preset charging anomaly information is sent to the associated terminal device. Therefore, the user may be alerted to the laser wireless charging anomaly, prompting the user to restart wireless charging or inspect the laser or the receiver. Therefore, the charging current of the receiver can be detected in real time. Consequently, in response to the instantaneous decrease in the charging current of the receiver being detected, it determines that the laser light emitted by the transmitter is not received by the receiver, thereby turning off the laser for emission and reducing the waste of electrical resources.

In some optional implementations of some embodiments, the execution entity may control the associated transmitter to perform the laser start operation based on the target wireless charging start information by performing the following steps.

In step 1, it is determined that a remaining battery capacity of the associated smart door lock satisfies a preset charging battery capacity condition. The preset charging battery capacity condition may be that the remaining battery capacity is less than or equal to a preset high battery capacity threshold. The preset high battery capacity threshold may be 20%. Therefore, the smart door lock may be charged when the battery capacity is at a medium level, thereby allowing the battery capacity of the smart door lock to remain at a sufficient level for an extended period, avoiding situations such as power outages that could deplete the smart door lock's battery capacity and affect user experience.

In step 2, in response to determining that the remaining battery capacity of the smart door lock satisfies the preset charging battery capacity condition, whether a current time point satisfies a preset rest time condition is determined. The preset rest time condition may be that the current time point falls within a late-night time range. The late-night time range may be from 12:00 AM to 3:00 AM.

In step 3, in response to determining that the current time point satisfies the preset rest time condition, the target wireless charging start information is generated. At this point, a charging time point included in the target wireless charging start information may be the current time point. Therefore, the smart door lock may be charged during periods with less user activity, thereby reducing the impact of user activity on smart door lock charging and the impact of the laser light on users.

In step 4, in response to determining that the current time point does not satisfy the preset rest time condition, a current date is obtained. The current date may be the date of the current day. For example, the current date may be Oct. 1, 2023.

In step 5, based on the current date, a preset wireless charging time prediction model corresponding to the current date is screened from a preset wireless charging time prediction model set. The preset wireless charging time prediction model set may include a preset charging time prediction model corresponding to holidays, a preset charging time prediction model corresponding to rest days, and a preset charging time prediction model corresponding to workdays. The preset wireless charging time prediction model may be a pre-trained machine learning model that takes the current date as input and outputs a wireless charging time sequence. For example, the machine learning model may be a support vector machine model or a decision tree model. The rest day may characterize Saturdays and Sundays that are not holidays or workdays. Exemplarily, in response to determining that the current date characterizes a workday, the execution entity screens the preset charging time prediction model corresponding to workdays from the preset wireless charging time prediction model set. In response to determining that the current date characterizes a rest day, the execution entity screens the preset charging time prediction model corresponding to the rest days from the preset wireless charging time prediction model set. In response to determining that the current date represents a holiday, the execution entity screens the preset charging time prediction model corresponding to the holidays from the preset wireless charging time prediction model set.

Further, each training sample in a training sample set of the preset wireless charging time prediction model may include a current date sample and a wireless charging time sequence sample. The current date sample may be a historical date on which a user used the smart door lock. The wireless charging time sequence sample may be each time point within the current date sample during which the user performed no operation on the smart door lock. Performing no operation on the smart door lock may be understood as the smart door lock detecting no operation. When an object detection sensor is disposed on the wireless charging device, the wireless charging time sequence sample may further be each time point within the current date sample during which the user performed no operation on the smart door lock and the object detection sensor detected no object. In some embodiments, the wireless charging time sequence sample corresponding to the current date sample may be determined through the following steps. First, each time point within the current date sample during which the user performed no operation on the smart door lock is acquired. Then, time points among time points, each of which satisfies a preset time interval condition, are determined as the wireless charging time sequence sample. The preset time interval condition may be a time interval between the time point and a subsequent and closest operation time point, which is greater than or equal to a preset time interval threshold. For example, the preset time interval threshold may be 2 hours. The operation time point may be a time point at which the user performed an operation on the smart door lock. It can be understood that different preset wireless charging time prediction models adopt different training sample sets. For example, the training sample set of the preset wireless charging time prediction model corresponding to workdays includes current date samples that are all dates of workdays.

In step 6, the current date is inputted into the wireless charging time prediction model to obtain a wireless charging time sequence.

In step 7, a wireless charging time that satisfies a preset proximity time condition is selected from the wireless charging time sequence to be determined as a target wireless charging time. Herein, the preset proximity time condition may be a wireless charging time in the wireless charging time sequence that is closest to and after the current time point.

In step 8, the target wireless charging start information is generated based on the target wireless charging time. In practice, the execution entity may determine the target wireless charging time as a charging start time included in the target wireless charging start information. The target wireless charging start information may be "charge the receiver at the target wireless charging time."

In step 9, an associated transmitter is controlled to perform a laser start operation based on the generated target wireless charging start information.

The aforementioned Step 1 to Step 9 serve as an inventive point of an embodiment of the present disclosure, the third technical problem, i.e., "When performing laser wireless charging on the smart door lock during periods of frequent use, the laser light emitted by the laser may be blocked multiple times, so as to prevent the laser light reaching the receiver, thereby causing the wireless charging process to be interrupted multiple times, resulting in lower charging efficiency, and the laser light may also harm the user's eyes when shining on them" mentioned in the background art is addressed. The reasons for the lower charging efficiency and potential harm to the user are as follows. When performing laser wireless charging on the smart door lock during periods of frequent use, the laser light emitted by the laser may be blocked multiple times, so as to prevent the laser light from reaching the receiver, thereby causing the wireless charging process to be interrupted multiple times, resulting in lower charging efficiency, and the laser light may also harm the user's eyes when shining on them. If the above factors are resolved, charging efficiency can be further improved, and harm to the user can be reduced. To achieve this effect, the present disclosure further includes: when a battery capacity of the smart door lock is at a medium level, determining whether the current time is suitable for performing laser charging on the smart door lock. First, if the current time is late at night, laser charging may be performed on the smart door lock at the current time. Then, if the current time is not late at night, a corresponding wireless charging time prediction model may be selected based on the current date. Afterwards, the current date is input into the wireless charging time prediction model to obtain a time with fewer user operations as a charging time. Finally, when the time reaches the charging time, laser charging is performed on the smart door lock. The wireless charging time prediction model may be trained based on the user habits of using the smart door lock. Separate models may be trained for rest days, workdays, and holidays to improve the accuracy of the models. Thus, based on the date, time point, and user habits, a period with less frequent use of the smart door lock can be determined for charging the smart door lock, thereby reducing the impact of door opening and closing on wireless charging, decreasing the count of interruptions during the wireless charging process, and improving charging efficiency. Furthermore, potential harm to the user from the laser light is reduced.

In step 802, a current detection is performed on each photoelectric conversion component in an associated photoelectric conversion component set to obtain a current information set corresponding to the photoelectric conversion component set.

In some embodiments, the execution entity may perform the current detection on each photoelectric conversion component in the associated photoelectric conversion component set to obtain the current information set corresponding to the photoelectric conversion component set. Each photoelectric conversion component in the photoelectric conversion component set may be disposed on the transmitter. In practice, for each photoelectric conversion component in the associated photoelectric conversion component set, the execution entity may perform the current detection on the photoelectric conversion component via a current detection module connected to the photoelectric conversion component to obtain current information corresponding to the photoelectric conversion component. The photoelectric conversion component may be a silicon photocell. The current detection module may be a module configured to detect the magnitude of a current converted by the silicon photocell. For example, the current detection module may be a Hall sensor current detection module or a resistive current detection module.

In step 803, whether each piece of current information in the current information set satisfies a preset charging condition is determined.

In some embodiments, the execution entity may determine whether each piece of current information in the current information set satisfies the preset charging condition. The preset charging condition may be a current value corresponding to the current information that is greater than or equal to a preset current threshold. The preset current threshold may be a minimum value of current that the photoelectric conversion component may convert when a reflector on the receiver reflects the laser light to the photoelectric conversion component.

In step 804, in response to determining that each piece of current information in the current information set satisfies the preset charging condition, the transmitter is controlled to perform a wireless charging operation on an associated receiver.

In some embodiments, in response to determining that each current information in the current information set satisfies the preset charging condition, the execution entity may control the transmitter to perform the wireless charging operation on the associated receiver. In practice, in response to determining that each current piece of information in the current information set satisfies the preset charging condition, the execution entity may continue to control a laser driver included in the transmitter to drive the laser to emit the laser light to perform laser charging on the associated receiver. Further, in response to determining that the current information set includes current information that does not satisfy the preset charging condition, the transmitter is controlled to perform an angle adjustment operation.

In some embodiments, the execution entity may also perform the following steps to control the transmitter to perform the angle adjustment operation.

In step 1, in response to determining that each piece of current information in the current information set does not satisfy the preset charging condition, a laser is controlled to move to a preset position. The preset position may be a limit position within a movement range of the laser. For example, the preset position may be the leftmost and uppermost position within a movable range of the laser. In some embodiments, a horizontal stepping motor included in a pan-tilt assembly connected to the laser may drive the laser to move to the leftmost position, and a vertical stepping motor included in the pan-tilt assembly may drive the laser to move to the uppermost position.

In step 2, the laser is controlled to perform a first movement operation based on a preset movement information sequence, and a first real-time current detection is performed on each photoelectric conversion component in the photoelectric conversion component set to obtain first real-time current information corresponding to the photoelectric conversion component set. Each piece of preset movement information in the preset movement information sequence includes a preset movement direction and a preset movement distance. The preset movement information sequence may be a preset movement path of the laser.

In some embodiments, the preset movement information sequence may be determined based on the preset position. Exemplarily, when the laser moves to the leftmost position. The first N pieces of preset movement information in the preset movement information sequence may represent moving rightward by a preset horizontal distance. The preset horizontal distance may be less than a width of a photovoltaic cell on the receiver. N is a preset quantity. A sum of N preset horizontal distances may equal a horizontal movement limit distance of the laser. An (N+1)th piece of preset movement information in the preset movement information sequence may represent moving downward by a preset vertical distance. The preset vertical distance may be less than a height of the photovoltaic cell on the receiver. An (N+1+N)th piece of preset movement information in the preset movement information sequence may represent moving leftward by the preset horizontal distance. It can be understood that the laser moves in a serpentine pattern, each horizontal movement distance is less than the width of the photovoltaic cell on the receiver, and each vertical movement distance is less than the height of the photovoltaic cell on the receiver. During the movement, the execution entity may perform a current detection on the photoelectric conversion component in the first movement operation through a current detection module connected to the photoelectric conversion component to obtain the first real-time current information corresponding to the photoelectric conversion component set. Thus, through the preset movement information sequence, scanning may be performed within the movement range of the laser to preliminarily determine a position of the receiver.

In step 3, in response to determining that the detected first real-time current information corresponding to any photoelectric conversion component satisfies a preset first real-time charging condition, the laser is controlled to perform a second movement operation based on a target movement information sequence, and a second real-time current detection is performed on each photoelectric conversion component in the photoelectric conversion component set to obtain second real-time current information corresponding to the photoelectric conversion component set. The preset first real-time charging condition may be that a current value corresponding to the first real-time current information is greater than or equal to the preset current threshold. Each piece of target movement information in the target movement information sequence includes a target movement direction and a target movement distance, and the target movement distance included in any target movement information is less than the preset movement distance included in any preset movement information. The target movement information sequence may be determined based on a position of any photoelectric conversion component among the detected photoelectric conversion components. Thus, upon detecting that any photoelectric conversion component senses reflected laser light for photoelectric conversion, the laser may be further controlled to move by a smaller distance to fine-tune an angle of the laser, thereby enabling the laser to more accurately align with the receiver.

In step 4, in response to determining that each piece of the detected second real-time current information corresponding to each photoelectric conversion component satisfies a preset second real-time charging condition, the transmitter is controlled to perform the wireless charging operation. The preset second real-time charging condition may be that a current value corresponding to the second real-time current information is greater than or equal to the preset current threshold.

In some optional implementations of some embodiments, in response to determining that the detected first real-time current information corresponding to any photoelectric conversion component satisfies the preset first real-time charging condition, the execution entity may perform the following steps, so as to control the laser to perform the second movement operation based on the target movement information sequence, and perform the second real-time current detection on each photoelectric conversion component in the photoelectric conversion component set to obtain the second real-time current information corresponding to the photoelectric conversion component set.

In step 1, in response to determining that the detected first real-time current information corresponding to any photoelectric conversion component satisfies the preset first real-time charging condition, a location identifier corresponding to the any photoelectric conversion component is determined. The location identifier may be an identifier representing a position of the any photoelectric conversion component. For example, the location identifier may be "photoelectric conversion component, lower right".

In step 2, the target movement information sequence is determined based on the location identifier. In practice, the execution entity may determine the target movement information sequence based on the location identifier and a preset movement information sequence configuration information set. Each piece of preset movement information sequence configuration information in the preset movement information sequence configuration information set may include a preset location identifier and a preset movement information sequence. Exemplarily, first, the execution entity may determine preset movement information sequence configuration information whose included preset location identifier is identical to the location identifier as target movement information sequence configuration information. Then, the execution entity may determine a preset movement information sequence included in the target movement information sequence configuration information as the target movement information sequence. In some embodiments, when the location identifier is "photoelectric conversion component, lower right", the first M pieces of target movement information in the target movement information sequence may represent moving rightward by a target horizontal distance. The target horizontal distance may be less than a width of a reflector. M target horizontal distances may be equal to a width of the photovoltaic cell. An (M+1)th piece of target movement information in the target movement information sequence may represent moving downward by a target vertical distance. The target vertical distance may be less than a height of the reflector.

In step 3, the laser is controlled to perform the second movement operation based on the target movement information sequence, and performs the second real-time current detection on each photoelectric conversion component in the photoelectric conversion component set to obtain the first real-time current information corresponding to the photoelectric conversion component set. It can be understood that the laser moves in a serpentine pattern, each horizontal movement distance is less than the width of the reflector, and each vertical movement distance is less than the height of the reflector. During the movement, the execution entity may perform a current detection on the photoelectric conversion component in the second movement operation through the current detection module connected to the photoelectric conversion component to obtain the second real-time current information corresponding to the photoelectric conversion component set.

In some embodiments, after controlling the transmitter to perform the wireless charging operation on the associated receiver in response to determining that each current information in the current information set satisfies the preset charging condition, the execution entity may further perform the following steps.

In step 1, whether an object exists within a target region is determined by performing an object detection on the target region using an associated object detection sensor. The target region may include a region corresponding to an emission path of the transmitter. The object detection sensor may be a proximity sensor or a human presence detection sensor.

In step 2, in response to determining that an object exists within the target region, the transmitter is controlled to stop the wireless charging operation. Thus, upon detecting that an object is blocking, laser charging may be stopped to avoid waste of electrical resources and potential effects of the laser light on the human body.

In some embodiments, after controlling the transmitter to perform the wireless charging operation on the associated receiver in a case where each piece of current information in the current information set satisfies the preset charging condition, the execution entity may further, in response to that a door unlocking operation corresponding to an associated smart door lock is detected, control the transmitter to stop the wireless charging operation. In practice, in response to that a door unlocking operation of the smart door lock is detected, the transmitter is controlled to stop the wireless charging operation. Therefore, the impact of a laser light on a user entering the door can be avoided.

The foregoing embodiments of the present disclosure have the following beneficial effects. According to the method for wireless charging in some embodiments of the present disclosure, convenience for a user can be improved, and waste of electrical resources can be reduced. Specifically, a reason for inconvenience for a user and waste of electrical resources is as follows: for battery power supply, because the battery capacity consumption of an electrical load of a smart door lock is relatively high, a battery needs to be replaced frequently. For a laser wireless power supply, the volume of the receiver is relatively small. When the transmitter for emitting laser is manually adjusted to align with the receiver, the accuracy of the adjustment is relatively low, and a deviation of an angle at which a laser light emitted by a laser irradiates the receiver is relatively large, thereby causing a part of the laser light to not irradiate the receiver. Based on this, a method for wireless charging is provided in some embodiments of the present disclosure. The method for wireless charging first controls an associated transmitter to perform a laser start operation based on target wireless charging start information. Therefore, the laser may be activated. Then, a current detection is performed on each photoelectric conversion component in an associated photoelectric conversion component set to obtain a current information set corresponding to the photoelectric conversion component set. Each photoelectric conversion component in the photoelectric conversion component set is disposed on the transmitter. Afterwards, whether each piece of current information in the current information set satisfies a preset charging condition is determined. Therefore, the current condition of each photoelectric conversion component on the transmitter may be detected to determine whether each photoelectric conversion component receives a laser light reflected by the reflector on the receiver. Finally, in response to determining that each piece of current information in the current information set satisfies the preset charging condition, the transmitter is controlled to perform a wireless charging operation on the associated receiver. Therefore, when it is determined that each photoelectric conversion component receives a laser light reflected by the reflector on the receiver, that is, when the laser light completely covers the reflector on the receiver, a laser charging operation may be performed. Because the method for wireless charging is adopted, a user does not need to frequently replace the battery of the smart door lock, thereby improving the convenience for the user. Also, because the laser charging operation is performed only when the laser light completely covers the reflector on the receiver, irradiation of the laser light outside the receiver can be avoided, thereby reducing waste of electrical resources. Therefore, according to the method for wireless charging in some embodiments of the present disclosure, convenience for a user can be improved, and waste of electrical resources can be reduced.

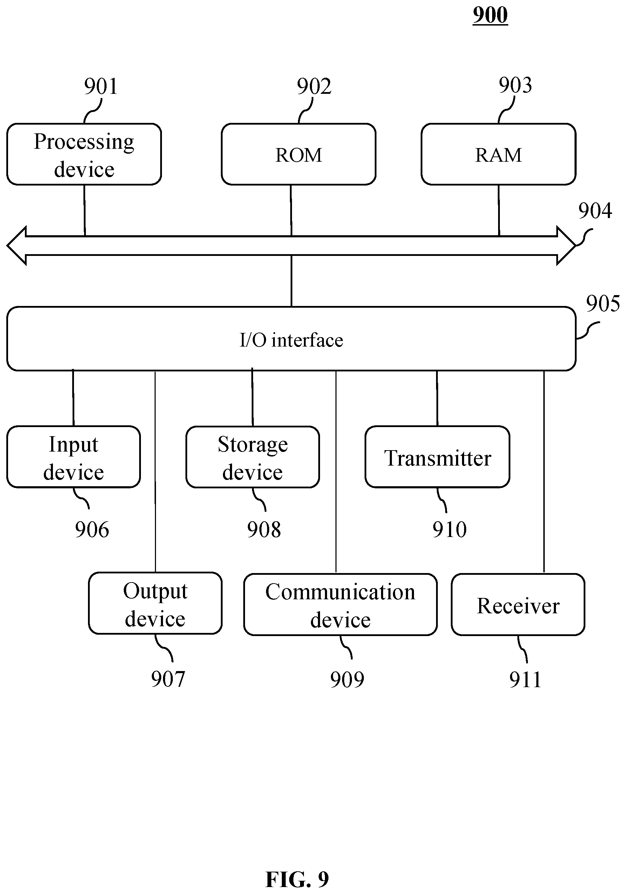

FIG. 9 is a schematic diagram illustrating a hardware structure of a wireless charging device 900 according to some embodiments of the present disclosure. The wireless charging device shown in FIG. 9 is merely an example and should not impose any limitation on functions and scope of use of embodiments of the present disclosure.

As shown in FIG. 9, the wireless charging device 900 may include a processing device (e.g., a central processing unit, a graphics processing unit, etc.) 901, which may execute various appropriate actions and processing according to a program stored in a read-only memory (ROM) 902 or a program loaded from a storage device 908 into a random-access memory (RAM) 903. Various programs and data required for operation of the wireless charging device 900 are also stored in the RAM 903. The processing device 901, the ROM 902, and the RAM 903 are connected to each other via a bus 904. An input/output (I/O) interface 905 is also connected to the bus 904.

Generally, the following devices may be connected to the I/O interface 905 including: an input device 906 including such as a camera, etc.; an output device 907 including a liquid crystal display (LCD), a speaker, a vibrator, etc.; a storage device 908 including a magnetic tape, a hard disk, etc.; and a communication device 909. The communication device 909 may allow the wireless charging device 900 to perform wireless or wired communication with other devices to exchange data. The wireless charging device 900 further includes a transmitter 910 configured to perform a wireless charging operation. The transmitter 910 is provided with a photoelectric conversion component set. The wireless charging device 900 further includes a receiver 911 configured to receive a laser light emitted by the transmitter and convert optical energy of the laser light into electrical energy. The receiver 911 is provided with a reflector set. Although FIG. 9 shows the wireless charging device 900 having various devices, it should be understood that the implementation or possession of all the devices shown is not required. Alternatively, more or fewer devices may be implemented or possessed. Each block shown in FIG. 9 may represent one device or may represent a plurality of devices as needed.

In some embodiments, the wireless charging device further includes a smart door lock. The smart door lock may be electrically connected to the receiver. The receiver is further configured to supply power to the smart door lock. The receiver may be disposed at an upper end of the smart door lock. A specific manner in which the receiver is disposed at the upper end of the smart door lock is not limited herein. The receiver may include a photovoltaic cell, a voltage regulation chip, and a lithium battery cell. The receiver may further include a receiver housing. The receiver housing may be an outer shell of the receiver. The voltage regulation chip and the lithium battery cell may both be disposed within the receiver housing. The photovoltaic cell may be disposed at an outer end of the receiver housing. The photovoltaic cell may be a solar cell. The voltage regulation chip may be configured to regulate a voltage in the photovoltaic cell to a voltage receivable by the lithium battery cell. The voltage regulation chip may be a boost chip. The voltage regulation chip and the lithium battery cell may both be disposed on a receiver circuit board. The voltage regulation chip may be electrically connected to the photovoltaic cell and the lithium battery cell via wires, respectively, to transmit power of the photovoltaic cell to the lithium battery cell. The lithium battery cell may be electrically connected to a door lock circuit board within the smart door lock. A power management chip and a power interface may be disposed on the door lock circuit board. Therefore, electrical energy converted by the photovoltaic cell may be transmitted to the lithium battery cell via the voltage regulation chip for electrical energy storage and for supplying power to the smart door lock.

In some embodiments, the photovoltaic cell may be electrically connected to the voltage regulation chip. The photovoltaic cell may be configured to convert an optical signal into an electrical signal. The voltage regulation chip may be electrically connected to the lithium battery cell via a charging circuit to supply power to the lithium battery cell. The lithium battery cell may be electrically connected to a power interface on the door lock circuit board within the smart door lock to supply power to the smart door lock.

In some embodiments, an object detection sensor is further disposed on the transmitter and is configured to detect whether an object exists within a target region.

Optionally, the transmitter may be located at a preset position of the receiver. The preset position may be directly above the receiver. The preset position may also be at a preset angle obliquely above the receiver. For example, the preset position may also be at 45° obliquely above the receiver. The transmitter may include a transmitter housing, an adjustment component, a transmission circuit board, a laser driver, and a laser. The adjustment component may be connected to an exterior of the transmitter housing. The transmitter housing may be an outer shell of the transmitter. The adjustment component may be configured to connect the transmitter to another object. In some embodiments, an adjustable end of the adjustment component may be connected to the transmitter, and the other end of the adjustment component may be connected to another object. For example, the other end of the adjustment component may be fixed to a ceiling. Furthermore, the other end of the adjustment component may be fixed to a position on the ceiling where a power wire is provided, such that a power supply component included in the transmitter may be electrically connected to the power wire. The laser driver may be a constant current source drive circuit board. The laser may be a semiconductor laser. The laser may be driven by a constant current source circuit.

In some embodiments, the transmission circuit board may be provided with a control chip, a communication component, and a power supply component. The adjustment component and the power supply component may both be connected to the control chip. The power supply component and the control chip may both be connected to the laser driver. The communication component may be electrically connected to the control chip. The control chip may be a component configured to control and coordinate the operations of various components. For example, the control chip may be a single-chip microcomputer chip. The power supply component may be a power conversion device for small portable electronic devices and electronic appliances. The power supply component may be configured to convert an alternating current to a direct current. In an operating state, the power supply component may be connected to a household power supply to supply power to the laser driver and the laser.

In some embodiments, the reflector may be a corner cube prism. The corner cube prism may be configured to reflect the laser light. A photoelectric conversion component in the photoelectric conversion component set may correspond to a reflector in the reflector set. A count of photoelectric conversion components included in the photoelectric conversion component set may be the same as a count of reflectors included in the reflector set. It can be understood that the photoelectric conversion component included in the photoelectric conversion component set may correspond to the reflector included in the reflector set in a one-to-one correspondence. In some embodiments, when the laser is aligned with a photovoltaic battery, the laser light reflected by the reflector in the reflector set may irradiate a corresponding photoelectric conversion component. The photoelectric conversion component set may be connected to the control chip. The control chip may be configured to determine whether the photoelectric conversion component set includes a photoelectric conversion component that receives the laser light.

In some embodiments, the adjustment component may be a gimbal component. The gimbal component may include a horizontal stepping motor, a vertical stepping motor, a vertical transmission disk, and a horizontal gear disk. The horizontal stepping motor may be electrically connected to the horizontal gear disk. The horizontal stepping motor may be configured to drive the horizontal gear disk to move horizontally under the control of the control chip. The vertical stepping motor may be electrically connected to the vertical transmission disk. The vertical stepping motor may be configured to drive the vertical transmission disk to move vertically under the control of the control chip. Thus, an angular position of an emitting end may be automatically adjusted through the gimbal component, such that the emitting end may emit a laser light onto the photovoltaic battery. Manual adjustment of the gimbal component by a user is not required, contact with a power source is avoided, and the safety of the user is improved.

In some embodiments, the laser may be a visible light laser. It can be understood that the laser light emitted by the laser may be a laser light visible to a human eye. For example, the laser may be a helium-neon laser. Thus, the user may adjust an angular position of the emitting end according to an emission path of the laser light, such that the emitting end can emit the laser light onto the photovoltaic battery. Thus, the count of times the user adjusts the angle is reduced, and operation becomes simpler.

In some embodiments, the communication component may include at least one of a Bluetooth module, an antenna, a 5G/4G module, and a wireless communication module. The wireless communication module may be a WIFI module.

In some embodiments, a connection manner between the receiver and the smart door lock may be a pluggable manner. In some embodiments, a lower end of the receiver may be provided with a charging plug. For example, the lower end of the receiver may be provided with a USB plug. The charging plug may be electrically connected to the lithium battery cell. Correspondingly, an upper end of the smart door lock may be provided with a charging slot. The charging plug may be inserted into the charging slot to charge the smart door lock.

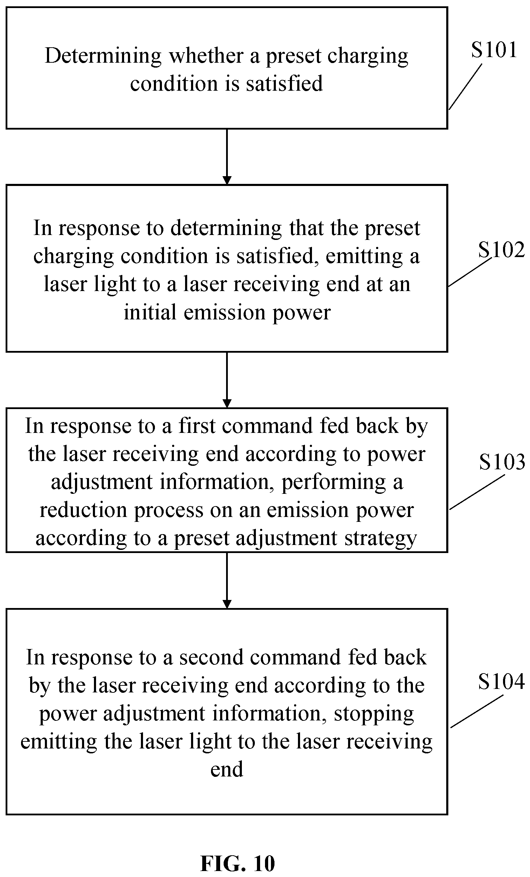

In some optional embodiments of the present disclosure, a laser wireless charging method for a smart device is provided. FIG. 10 is a flowchart illustrating a method for laser wireless charging of a smart device according to some embodiments of the present disclosure. As shown in FIG. 10, the method includes the following steps.

In S101, whether a preset charging condition is satisfied is determined.

First, the method is applicable to a side having a laser transmitter. In one embodiment, a central control unit is disposed in the smart door lock. The central control unit is configured to transmit commands to the laser emitting end and a laser receiving end to enable interaction between the laser emitting end and the laser receiving end. Alternatively, a control unit may be disposed in each of the emitting end and the receiving end to execute an interactive method for laser wireless charging. The preset charging condition is to ensure that the reception of laser light and conversion of energy can be completed during laser emission, and also to provide protection for humans. The preset charging condition may include: the position alignment between the laser emitting end and the laser receiving end (i.e., turning on the laser transmitter enables a light source to be accurately projected onto a receiving device of an electronic device, the receiving device converts the energy and completes the charging of a lithium battery), detection of whether a living being exists within a predetermined region near the laser light (to avoid causing harm to humans or animals), and detection of whether a current battery capacity of the receiving end is lower than a first threshold (to avoid charging when the battery is fully charged). At least one of the above conditions needs to be satisfied, or the above conditions need to be simultaneously satisfied, for charging to proceed. The specific configuration may be set according to actual user conditions. Furthermore, other preset charging conditions may be added.

The laser emitting end may be only one. The laser emitting end emits laser lights in various directions. Smart devices where the laser receiving end is located may be a plurality of smart devices. The emitting end achieves emission of laser light to each of the plurality of smart devices through position adjustment and calibration, thereby achieving the purpose of wireless charging.

In S102, in response to determining that the preset charging condition is satisfied, a laser light is emitted to a laser receiving end at an initial emission power.

Taking the simultaneous satisfaction of the three conditions mentioned above as an example, in response to determining that the position alignment is completed, no living being exists within a predetermined region, and a current battery capacity is lower than a first battery capacity threshold, it is determined the preset charging condition is satisfied. At this time, the laser emitting end emits the laser light to the laser receiving end at the initial emission power.

In S103, in response to a first command fed back by the laser receiving end according to power adjustment information, a reduction process is performed on an emission power according to a preset adjustment strategy.

The power adjustment information at least includes a current battery capacity of the smart device where the laser receiving end is located. The laser receiving end collects the current battery capacity in real time. In response to determining the battery capacity reaches a certain threshold (e.g., the first battery capacity threshold), the receiving end feeds back the first command to the emitting end. At this time, the emitting end performs the reduction process on the emission power according to the preset adjustment strategy.

Furthermore, the power adjustment information may include a relationship between a current user count and a preset user count, or historical usage data. For example, the smart device is a smart door lock. In response to determining that the current user count is 2 at 7:00 PM, which is lower than the preset user count of 3, it is determined that someone may return in the future, thus the first command is sent to reduce the emission power. There are three purposes for reducing the emission power. First, when a user returns, radiation generated is reduced, thereby reducing harm to the user. Second, a current is reduced. Fast charging batteries use a high current, which causes greater loss. Adjusting the power for trickle charging is better for the battery, and charging with a small current has a better effect. Third, trickle charging does not cause the battery to heat up, thereby providing a battery protection function.

The reduction process is performed on the emission power based on the preset adjustment strategy. Specifically, the adjustment strategy is to determine an adjusted emission power based on the current battery capacity, a current time, a current indoor user count, and historical usage data. For example, the smart device is a door lock, a current battery capacity level is 95%, an emission power is assumed to be 20 units, and the current time is 2:00 AM, at this time, based on the historical usage data, it is determined that the user is not accustomed to using the door lock at this time (2:00 AM). The power may be reduced to 5 units to ensure that the door lock is fully charged before the user uses the door lock at dawn. The smart device here may further include an independent smart door lock, a smart electronic scale, a smart vertical air conditioner, a wireless charging razor, etc. Furthermore, in one embodiment, the smart device may be a smart door lock. The smart door lock is disposed on a smart door. The smart door lock is configured to obtain various data information (such as battery capacity) of the smart door and execute the method for laser wireless charging described above.

In S104, in response to a second command fed back by the laser receiving end according to the power adjustment information, the laser light is stopped from emitting to the laser receiving end.

The second command may also be fed back by the laser receiving end based on the current battery capacity. The second command is a command fed back by the receiving end to the emitting end when the battery capacity is full. The second command stops laser light emission to avoid energy waste. Furthermore, the judgement may also be made based on a relationship between the user count and the preset user count, or historical usage data of the door lock.

In the present embodiment, it is first determined whether the preset charging condition is satisfied. In response to determining that the preset charging condition is satisfied, the laser light is emitted to the laser receiving end at the initial emission power. In response to the first command fed back by the laser receiving end according to the power adjustment information, the reduction process is performed on the emission power according to the preset adjustment strategy. Simultaneously, in response to the second command fed back by the laser receiving end according to the power adjustment information, the laser light is stopped from emitting to the laser receiving end. Compared with related technologies, by setting the preset charging condition, a determination is made on whether charging is able to be performed currently. Then, through the first command and the second command fed back by the laser receiving end, the initial emission power is reduced or stopped. Therefore, flexible control of the laser emission power during the charging process is achieved, thereby alleviating the technical problem of insufficiently precise control of laser emission power in prior art.

In some embodiments, the detecting whether a preset charging condition is satisfied includes: detecting whether a position alignment between the laser emitting end and the laser receiving end has been completed; and/or detecting whether a living being exists within a predetermined region of the laser emitting end; and/or detecting whether a current battery capacity of the laser receiving end is lower than a first battery capacity threshold. In a case where the position alignment has been completed, the living being does not exist within the predetermined region, and the current battery capacity is lower than the first battery capacity threshold, it is determined that the preset charging condition is satisfied.

In the present embodiment, the preset charging condition is to ensure that reception of laser light and conversion of energy can be completed during laser emission, and also to provide protection for humans. In the present embodiment, the preset charging condition includes the position alignment between the laser emitting end and the laser receiving end, detection of whether a living being exists within a range near the laser light, and detection of whether a current battery capacity of the receiving end is lower than the first threshold. Furthermore, the above three conditions need to be simultaneously satisfied to determine that the preset charging condition is satisfied. Certainly, the specific configuration may also be set according to actual user conditions. Other preset charging conditions may also be added. By setting the preset charging condition, accurate projection of the light source onto the receiving device of the electronic device to implement the charging process can be ensured. Simultaneously, situations of causing harm to humans and energy waste are avoided.

In some embodiments, the in response to a first command fed back by the laser receiving end according to power adjustment information, performing a reduction process on an emission power according to a preset adjustment strategy includes: after receiving the first command, acquiring real-time charging information, historical usage data, and a current user count, wherein the real-time charging information includes a current battery capacity and a current time; determining a target emission power according to a relationship between the current user count and a preset user count, and emitting the laser light to the laser receiving end at the target emission power; and/or determining the target emission power by comparing the current battery capacity and the current time with the historical usage data, and emitting the laser light to the laser receiving end at the target emission power. The target emission power is lower than the initial emission power.

In the present embodiment, after receiving the first command, it indicates that the current battery capacity is already greater than the first threshold. Therefore, the power may be appropriately reduced. However, reducing the power is not directly reducing to a fixed value. The power may be reduced dynamically. First, the charging information including the current battery capacity and the current time is obtained, and the historical usage data is obtained. The historical usage data here includes a usage time, a usage frequency, etc., of the smart device by a user. By determining the current time, whether the user is likely to use the door lock within a future time period is determined (or when the next use of the door lock is expected). Then, the emission power is determined.

Take the smart door lock as an example, the current battery capacity level is 95%, the emission power is assumed to be 20 units, and the current time is 2:00 AM, at this time, based on the historical usage data, it is determined that the user is not accustomed to using the door lock at this time (2:00 AM). The power may be reduced to 5 units to ensure that the door lock is fully charged before the user uses the door lock at dawn.

In another situation, the current battery capacity level is 95%, the emission power is also 20 units, and the current time is 4:00 PM, it is determined that he next few hours are a time when users frequently use the door lock. At this time, the power may be adjusted to 15 units to quickly charge the door lock.

Furthermore, the charging information may also include a charging time that has elapsed or other parameters. If the charging time that has elapsed is too long (greater than a certain duration threshold), the emission power is set to 18 units to quickly charge the door lock, etc. The user may perform personalized settings.

In another possible embodiment, the target emission power may also be determined according to a relationship between a current indoor user count and the preset user count. In some embodiments, a manner for determining the indoor user count may be: when a user opens the door to enter, how many people entered this time is determined through an infrared collection and detection device. Then, at a certain time node (for example, 7:00 PM), when there are only 2 people indoors is determined, which is lower than the preset user count of 3, it indicates that the door is very likely to be used again within a future time period. At this time, the laser light is emitted based on the target emission power to reduce the laser light. Therefore, radiation generated for the user is reduced, and the battery is protected.

In some embodiments, after emitting the laser light to the laser receiving end based on the initial emission power in a case where the preset charging condition is satisfied, the method further includes: during emitting the laser light, periodically detecting whether a living being exists within the predetermined region of the laser emitting end according to a preset time period; and in a case where the living being is detected to exist, stopping emitting the laser light to the laser receiving end.

In the present embodiment, to avoid causing harm to humans or animals by direct laser irradiation, within the predetermined region of the laser emitting end (generally about 3 meters around a laser emission path), if a living being is detected, the emission of laser light is stopped. In some embodiments, the preset time period may be set to 0.5 seconds. That is, whether a living being exists near the laser emitting end every 0.5 seconds is collected.

Correspondingly, the present embodiment further provides another method for laser wireless charging for a smart device. The method is applied to the laser receiving end. The laser receiving end is configured to provide electrical energy for the smart device. The method specifically includes: collecting a battery capacity of the smart device in real time; in response to determining that a current battery capacity is higher than a first battery capacity threshold, sending a first command to a laser emitting end to cause the laser emitting end to perform a reduction process on an emission power; and in response to determining that the current battery capacity is fully charged, sending a second command to the laser emitting end to cause the laser emitting end to stop emitting laser light.

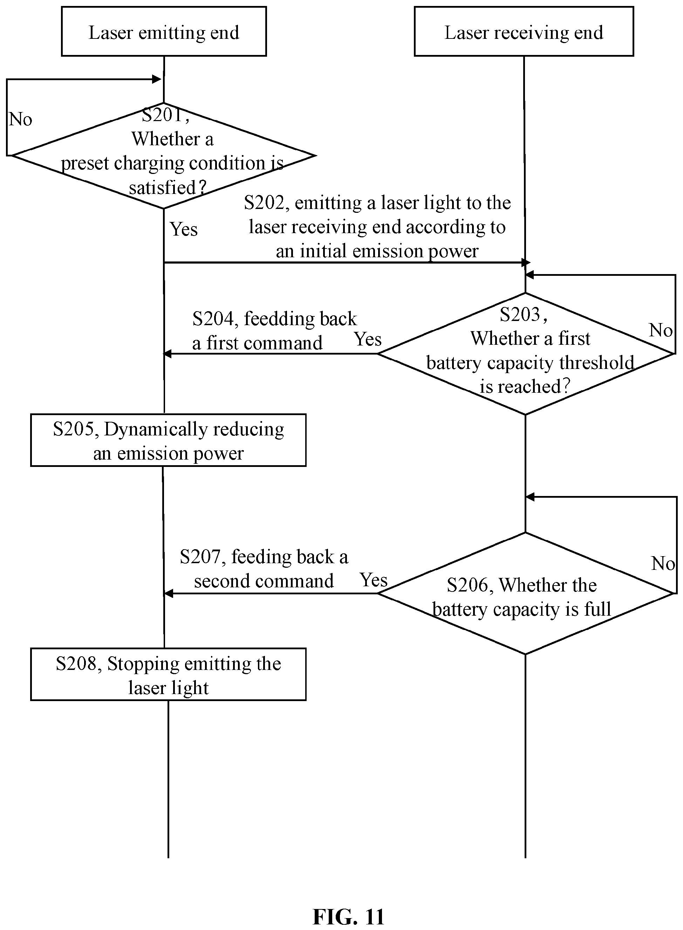

The present disclosure further provides another method for laser wireless charging of a smart device. As shown in FIG. 11, FIG. 11 is a schematic diagram illustrating an interaction process for wireless charging according to some embodiments of the present disclosure. The method specifically includes the following steps.

In S201, the laser emitting end determines whether a preset charging condition is satisfied. In response to determining that the preset charging condition is satisfied, the method proceeds to S202.

In the present embodiment, the preset charging condition includes the position alignment between the laser emitting end and the laser receiving end, detection of whether a living being is present within a predetermined region near the laser, and detection of whether a current battery capacity of the laser receiving end is lower than a first battery capacity threshold. Furthermore, the three conditions described above need to be satisfied simultaneously for a determination that the preset charging condition is satisfied. Certainly, the preset charging condition may be set according to actual user conditions. Other preset charging conditions may also be added.

In S202, the laser emitting end emits a laser light to the laser receiving end at an initial emission power.

In S203, the laser receiving end determines whether a first battery capacity threshold is reached. In response to determining that the first battery capacity threshold is reached, the method proceeds to S204.

In the present embodiment, the first command is fed back based on the battery capacity. In some cases, a relationship between a current user count and a preset user count, or historical usage data of the smart device, may also be set as a judgment condition for feeding back the first command.

In S204, the laser receiving end feeds back the first command to the laser emitting end.

In the present embodiment, the first battery capacity threshold is set to 90%. That is, the laser receiving end feeds back the first command to the laser emitting end in response to determining that the power is already 90% full.

In S205, in response to the first command, the laser emitting end dynamically reduces the emission power.

After receiving the first command, it indicates that the current battery capacity is greater than the first battery capacity threshold. Therefore, the laser emitting end may appropriately reduce the power. The laser emitting end obtains charging information. The charging information includes a current battery capacity and a current time. The laser emitting end also obtains historical usage data. The historical usage data includes a usage time, a usage frequency, or the like, of the smart device by a user. The laser emitting end determines the emission power by predicting, based on the judgment of the current time, whether the user is likely to use the smart door lock within a future period of time (or predicting the next time the smart door lock is expected to be used).

In S206, the laser receiving end determines whether the battery capacity is full. In response to determining that the battery capacity is full, the method proceeds to S207.

In S207, the laser receiving end feeds back a second command to the laser emitting end.

In S208, in response to the second command, the laser emitting end stops emitting the laser light.

It should be noted that the functions of current home devices are increasingly comprehensive. Taking a smart door lock as an example, in the present embodiment, the smart door lock not only has a basic unlocking function but also includes a peephole monitoring function. While a better product experience is provided for users, the smart door lock also imposes higher requirements on battery endurance. A common practice in the current market is to use two lithium batteries. However, the endurance can only last about four months. The long-distance wireless charging system enables users to use the smart door lock 24 hours a day without interruption. The long-distance wireless charging system eliminates concerns about endurance. Meanwhile, controlling the power emission device significantly improves the overall service life and safety of the entire system. At the same time, by setting the preset charging condition, a determination is made on whether charging can be performed currently. Furthermore, by using the first command and the second command fed back by the laser receiving end, the initial emission power is reduced or stopped. Therefore, flexible control of the laser emission power during the charging process is achieved, thereby alleviating the technical problem of insufficiently precise control of laser emission power in prior art.

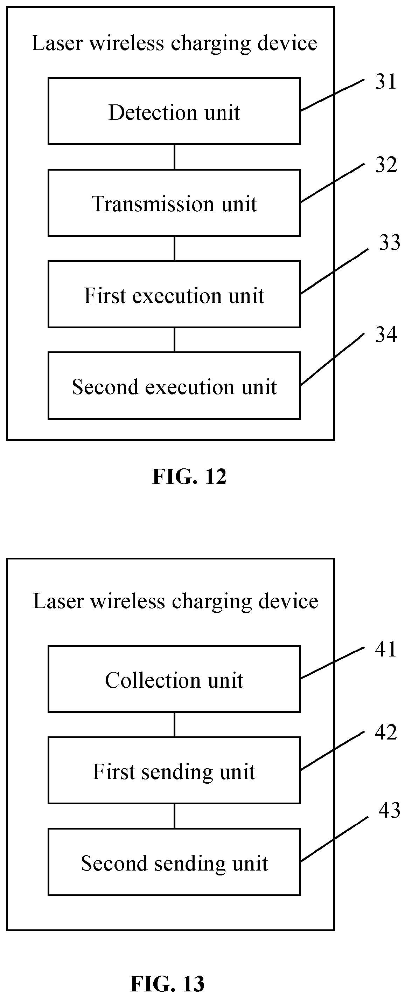

Further, as a specific implementation of the methods shown in FIG. 10 and FIG. 11, the present embodiment provides a laser wireless charging device for a smart device. As shown in FIG. 12, the device includes: a detection unit 31, a transmission unit 32, a first execution unit 33, and a second execution unit 34.

The detection unit 31 is configured to detect whether a preset charging condition is satisfied.

The transmission unit 32 is configured to emit a laser light to a laser receiving end at an initial emission power in response to a determination that the preset charging condition is satisfied.

The first execution unit 33 is configured to reduce an emission power according to a preset adjustment strategy in response to a first command fed back by the laser receiving end based on power adjustment information.

The second execution unit 34 is configured to stop emitting the laser light to the laser receiving end in response to a second command fed back by the laser receiving end based on the power adjustment information.

The power adjustment information includes at least a current battery capacity of the smart device where the laser receiving end is located.

In a specific application scenario, the detection unit 31 is specifically configured to detect whether a position alignment between the laser emitting end and the laser receiving end is completed, and/or detect whether a living being exists within a predetermined region of the laser emitting end, and/or detect whether a current battery capacity of the laser receiving end is lower than a first battery capacity threshold. In a case where the position alignment has been completed, the living being does not exist within the predetermined region, and the current battery capacity is lower than the first battery capacity threshold, it is determined that the preset charging condition is satisfied.

In a specific application scenario, the first execution unit 33 is specifically configured to: after receiving the first command, acquire real-time charging information, historical usage data, and a current user count, wherein the real-time charging information includes a current battery capacity and a current time; determine a target emission power according to a relationship between the current user count and a preset user count, and emit the laser light to the laser receiving end at the target emission power; and/or determine the target emission power by comparing the current battery capacity and the current time with the historical usage data, and emit the laser light to the laser receiving end at the target emission power. The target emission power is lower than the initial emission power.

In a specific application scenario, the first execution unit 33 is specifically configured to: during emitting the laser light, periodically detect whether the living being exists within the predetermined region of the laser emitting end according to a preset time period; and in a case where the living being is detected to exist, stop emitting the laser light to the laser receiving end.

Further, as a specific implementation of the methods shown in FIG. 10 and FIG. 11, the present embodiment provides a wireless charging device. The laser receiving end is configured to provide electrical energy for a smart device. As shown in FIG. 13, the device includes: a collection unit 41, a first sending unit 42, and a second sending unit 43.

The collection unit 41 is configured to collect a battery capacity of the smart device in real time.

The first sending unit 42 is configured to: in response to a determination that a current battery capacity is higher than a first battery capacity threshold, send a first command to a laser emitting end to cause the laser emitting end to perform a reduction process on an emission power.

The second sending unit 43 is configured to: in response to a determination that the current battery capacity is full, send a second command to the laser emitting end to cause the laser emitting end to stop emitting a laser light.

For other corresponding descriptions of each functional unit involved in the wireless charging device provided in the present embodiment, references may be made to corresponding descriptions in FIG. 10 and FIG. 11, which are not repeated here.

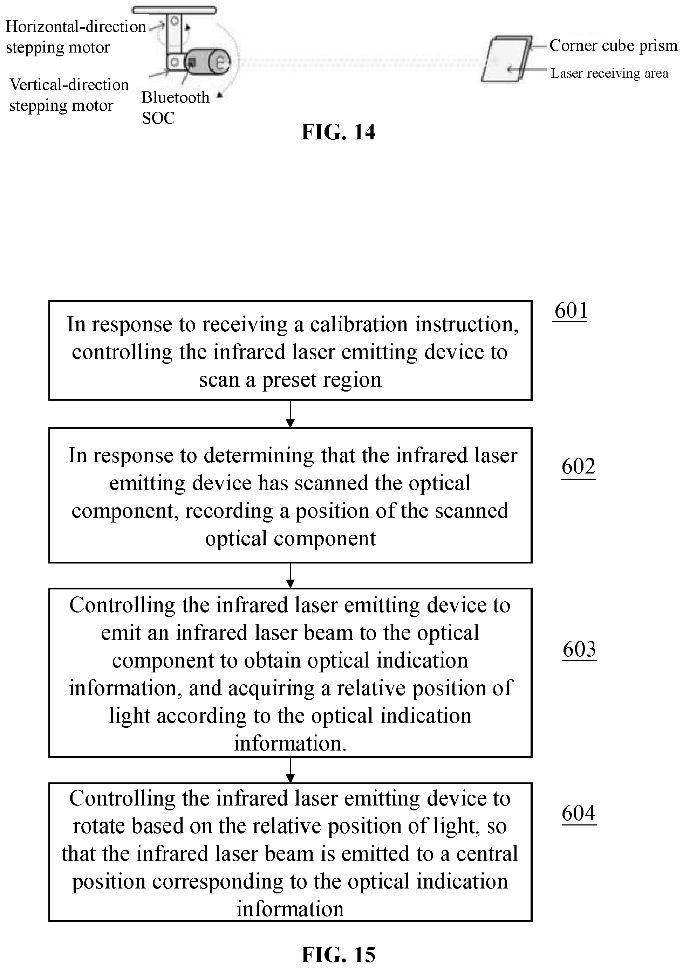

In some optional embodiments of the present disclosure, a wireless charging alignment method is provided to achieve wireless alignment during a wireless charging process. FIG. 14 is a schematic diagram illustrating an application scenario of an infrared charging device for a smart door lock in a method for wireless charging alignment according to some embodiments of the present disclosure.

The application scenario in FIG. 14 includes: a horizontal-direction stepping motor, a vertical-direction stepping motor, a Bluetooth system on a chip (SOC), a corner cube prism, and a laser receiving region. That is, the wireless emitting device may include: the horizontal-direction stepping motor, the vertical-direction stepping motor, and the Bluetooth SOC. The horizontal-direction stepping motor and the vertical-direction stepping motor may control an infrared laser emitting device to rotate. The infrared laser emitting device is connected at a right-side connection position of the Bluetooth SOC. The Bluetooth SOC may be a Bluetooth system on a chip. The laser receiving region may be a laser sensor. The laser sensor is integrated into the smart door lock. A corner cube prism (an optical component) is integrated on the surface of the laser sensor.

In an actual operation process, after the infrared laser emitting device and the smart door lock are installed, automatic alignment is required. During the automatic alignment process, the vertical-direction stepping motor and the horizontal-direction stepping motor of the infrared laser emitting device control the infrared laser emitting device to automatically scan an appropriate region. When the infrared laser light is aligned with the receiving region, the laser beam returns to the transmitter along an original path under the reflection of the corner cube prism. After a laser sensor of the infrared laser emitting device perceives the laser beam, the control speed of the stepping motors is reduced, and a fine-tuning stage is entered. The automatic calibration process is completed when the laser beam is completely aligned. The Bluetooth SOC of the transmitter learns whether the calibration is completed through the laser sensor.

FIG. 15 is a flowchart illustrating a wireless charging alignment method according to some alternative embodiments of the present disclosure. In the wireless charging alignment method, the wireless charging device for the smart door lock includes: a wireless emitting device, an infrared laser emitting device, and a laser sensor. The laser sensor is integrated on the smart door lock, and an optical component is integrated on the surface of the laser sensor. The method further includes the following steps.

In step 601, in response to receiving a calibration instruction, the infrared laser emitting device is controlled to scan a preset region.

In some embodiments, an execution entity (for example, the wireless charging device for a smart door lock) of the wireless charging alignment method may in response to receiving the calibration instruction, control the infrared laser emitting device to scan the preset region. For example, the wireless emitting device may include a Bluetooth system-on-chip (SOC), a horizontal-direction stepping motor, and a vertical-direction stepping motor. The horizontal-direction stepping motor may be a stepping motor that rotates in a horizontal direction. The vertical-direction stepping motor may be a stepping motor that rotates in a vertical direction. The Bluetooth SOC may be a Bluetooth chip set into the infrared laser emitting device. For example, the Bluetooth SOC may be a Bluetooth SOC chip. The infrared laser emitting device may be a transmitter that emits an infrared laser light and performs infrared laser charging. The smart door lock may be a smart fingerprint lock or a smart password lock. The laser sensor is configured to receive and sense the infrared laser light. The optical component may be a component that receives the infrared laser light. For example, the optical component may be a corner cube prism. The corner cube prism is attached to a surface of the laser sensor. The preset region may be a region of the smart door lock divided by a technician after the infrared laser emitting device and the smart door lock are installed in place. That is, the infrared laser emitting device may be controlled to emit the infrared laser light toward the preset region. After the laser light reflected by the optical component is received, it indicates that a position region for calibration is scanned. The infrared laser emitting device may emit an infrared light toward the laser sensor of the smart door lock to charge the smart door lock. The horizontal-direction stepping motor and the vertical-direction stepping motor may control the rotation of the infrared laser emitting device in horizontal and vertical directions, respectively.

In step 602, in response to determining that the infrared laser emitting device has scanned the optical component, the position of the scanned optical component is recorded.

In some embodiments, in response to detecting that the infrared laser emitting device has scanned the optical component, the execution entity may record the position of the scanned optical component. That is, three-dimensional coordinates of the optical component may be recorded. For example, a spatial coordinate system may be established in advance to determine a three-dimensional spatial position of the optical component.

In step 603, the infrared laser emitting device is controlled to emit an infrared laser beam to the optical component to obtain optical indication information, and a relative position of light is acquired according to the optical indication information.

In some embodiments, the execution entity may control the infrared laser emitting device to emit the infrared laser beam toward the optical component to obtain the optical indication information, and obtain the relative position of light according to the optical indication information. The optical indication information includes a schematic image of a light spot on the optical component. The schematic image of the light spot on the optical component displays a laser spot. That is, an imaging device may capture a schematic image of a light spot formed on the optical component by the laser beam emitted at the optical component, and the schematic image may be determined as the schematic image of the light spot on the optical component.

In practice, the execution entity may control the infrared laser emitting device to emit the infrared laser beam toward the optical component through the following steps. In step 1, a three-dimensional spatial coordinate system is constructed with a central installation position of the infrared laser emitting device as the origin center. In step 2, the transmitter's three-dimensional coordinates of an emission aperture of the infrared laser emitting device at the current moment are determined. In step 3, the optical component's three-dimensional coordinates corresponding to a central position of the optical component are determined. In step 4, with a point represented by the transmitter's three-dimensional coordinates as a starting emission point, the infrared laser emitting device is controlled to emit the infrared laser beam in a direction toward the optical component's three-dimensional coordinates.

In practice, the execution entity may obtain the relative position of light through the following steps. In step 1, a noise reduction process is performed on the schematic image of the light spot on the optical component to generate a noise-reduced schematic image of the light spot on the optical component. An image noise elimination algorithm may be used to perform the noise reduction process on the schematic image of the light spot on the optical component to generate the noise-reduced schematic image of the light spot on the optical component. For example, the image noise elimination algorithm may be a spatial domain filtering algorithm or a transform domain filtering algorithm. In step 2, a correction process is performed on the noise-reduced schematic image of the light spot on the optical component to generate a corrected noise-reduced schematic image of the light spot on the optical component. An image distortion correction algorithm may be used to perform the correction process on the noise-reduced schematic image of the light spot on the optical component to generate the corrected noise-reduced schematic image of the light spot on the optical component. In step 3, a relative position between a central position of the corrected noise-reduced schematic image of the light spot on the optical component and a displayed laser spot is determined as the relative position of light. The relative position of light includes a horizontal offset amount and a vertical offset amount. An image recognition algorithm (e.g., a pre-trained convolutional neural network (CNN)) may be used to identify the central position of the displayed light spot. Then, a horizontal offset amount (lateral offset amount) and a vertical offset amount between the central position of the displayed light spot and the central position of the corrected noise-reduced schematic image of the light spot on the optical component may be determined.

In step 604, the infrared laser emitting device is controlled to rotate based on the relative position of light, so that the infrared laser beam is emitted to a central position corresponding to the optical indication information.

In some embodiments, the execution entity may control the infrared laser emitting device to rotate based on the relative position of light, so that the infrared laser beam is emitted to the central position (e.g., the central position of the schematic image of the light spot on the optical component) corresponding to the optical indication information.

In practice, the execution entity may control the infrared laser emitting device to rotate through the following steps. In step 1, according to the horizontal offset amount included in the relative position of light, a horizontal offset angle of the infrared laser beam is calculated. That is, the horizontal offset angle of the infrared laser beam may be calculated through trigonometric functions. The horizontal offset angle has a corresponding offset direction. In step 2, according to the vertical offset amount included in the relative position of light, a vertical offset angle of the infrared laser beam is calculated. That is, the vertical offset angle of the infrared laser beam may be calculated through trigonometric functions. The vertical offset angle has a corresponding offset direction. In step 3, according to the horizontal offset angle and the vertical offset angle, the infrared laser emitting device is controlled to rotate. The horizontal-direction stepping motor may be controlled to offset horizontally by the horizontal offset angle. The vertical-direction stepping motor may be controlled to offset vertically by the vertical offset angle. Thus, the infrared laser emitting device is controlled to rotate.

In some embodiments, the recorded position information of the optical component, the optical indication information, the relative position of light, and the identification information of the wireless charging device for the smart door lock are combined into an infrared charging device data file.

In some embodiments, the execution entity may combine the recorded position information of the optical component, the optical indication information, the relative position of light, and the identification information of the wireless charging device for the smart door lock into the infrared charging device data file. Combining refers to merging.

In some embodiments, the infrared charging device data file is subjected to data slicing to obtain an infrared charging device data block group.

In some embodiments, the execution entity may perform data slicing on the infrared charging device data file to obtain the infrared charging device data block group.

In practice, the execution entity may perform data slicing on the infrared charging device data file through the following steps. In step 1, a data volume slicing threshold is set. That is, the data volume slicing threshold may be set randomly. The data volume slicing threshold may be a maximum data capacity threshold for a data block. The data volume slicing threshold may be 128 KB. In step 2, a slice data quantity corresponding to the infrared charging device data file is generated according to the data volume slicing threshold. First, the data capacity of the infrared charging device data file may be determined. Subsequently, a value obtained by performing a ceiling operation on a ratio of the data capacity to the data volume slicing threshold may be determined as the slice data quantity. In step 3, data slicing is performed on the infrared charging device data file according to the slice data quantity and the data volume slicing threshold to obtain the infrared charging device data block group. The infrared charging device data file is subjected to data slicing according to the data volume slicing threshold. That is, the maximum data capacity of an infrared charging device data block is the data volume slicing threshold.

In some embodiments, for each infrared charging device data block in the infrared charging device data block group, the following processing steps are performed. In step 1, a digital signature process is performed on the infrared charging device data block through a preset digital signature key to obtain an infrared charging device data block signature value. For example, the preset digital signature key may be a signature key in a preset UKEY. In step 2, a key is generated according to the identification information. For example, the identification information may be subjected to encoding processing to obtain an encoded identification. Subsequently, the encoded identification may be converted into a decimal number, which is determined as the key. In step 3, the infrared charging device data block is encrypted according to the key to obtain the encrypted infrared charging device data block. In step 4, the key is encrypted according to a public key in a preset asymmetric key pair to obtain an encrypted key. The asymmetric key pair may include a public key and a private key. In step 5, the signature process is performed on the encrypted infrared charging device data block according to the digital signature key to obtain an encrypted data block signature value. That is, the digital signature process may be performed on the encrypted infrared charging device data block according to the digital signature key to obtain the encrypted data block signature value. In step 6, the infrared charging device data block signature value, the encrypted infrared charging device data block, the encrypted key, and the encrypted data block signature value are combined into an encrypted data block sub-file.

Furthermore, because a storage space of a door lock system is small, and relevant data generated for the smart door lock is not stored in a classified manner, a delay of the door lock system is easily caused.

In some embodiments, each encrypted data block sub-file is stored in an associated storage node.

In some embodiments, the execution entity may store each encrypted data block sub-file in the associated storage node.

In practice, the execution entity may store each encrypted data block sub-file in the associated storage node through the following steps. In step 1, a data type of an encrypted data block sub-file with a data volume less than a preset data volume among the encrypted data block sub-files is marked as a first data type. The preset data volume may be 128 KB. In step 2, a storage type of an encrypted data block sub-file with a data volume equal to the preset data volume among the encrypted data block sub-files is marked as a second data type. In step 3, for each encrypted data block sub-file among the encrypted data block sub-files, the following processing steps are performed.

First, in response to the data type of the encrypted data block sub-file being the first data type, the encrypted data block sub-file is stored in a first storage sub-node of the storage node. The first storage sub-node may be a solid-state drive (SSD) of the storage node. Then, in response to determining that the data type of the encrypted data block sub-file is the second data type, the encrypted data block sub-file is stored in a second storage sub-node of the storage node. The second storage sub-node may be a hard disk drive (HDD) of the storage node.

The related content above serves as an inventive point of the present disclosure, the technical problem, i.e., "a delay of the door lock system is easily caused" is solved. Factors that easily cause a delay of the door lock system are often as follows: because a storage space of the door lock system is small, and relevant data generated for the smart door lock is not stored in a classified manner, a delay of the door lock system is easily caused. If the above factors are solved, an effect of reducing the delay of the door lock system can be achieved. To achieve this effect, first, a data type of an encrypted data block sub-file with a data volume less than the preset data volume among the encrypted data block sub-files is marked as a first data type. Second, a storage type of an encrypted data block sub-file with a data volume equal to the preset data volume among the encrypted data block sub-files is marked as a second data type. Then, for each encrypted data block sub-file among the encrypted data block sub-files, the following processing steps are performed. In response to the data type of the encrypted data block sub-file being the first data type, the encrypted data block sub-file is stored in a first storage sub-node of the storage node. In response to determining that the data type of the encrypted data block sub-file is the second data type, the encrypted data block sub-file is stored in a second storage sub-node of the storage node. Thus, classified storage of encrypted data block sub-files with different data volumes is implemented, and storage pressure on the door lock system is alleviated. Therefore, the reading rate of the encrypted data block sub-files is improved, and the delay of the door lock system is reduced.

In an optional embodiment of the present disclosure, in response to receiving a calibration instruction, the infrared laser emitting device is controlled to scan a preset region through the Bluetooth system chip; in response to determining that the infrared laser emitting device has scanned the optical component, a position of the scanned optical component is recorded, wherein the optical component represents a corner cube prism; the infrared laser emitting device is controlled to emit an infrared laser beam to the corner cube prism, and an associated camera device is controlled to collect optical indication information of the corner cube prism; a relative position of light is generated according to the optical indication information and a laser spot in the optical indication information; the horizontal direction stepping motor and the vertical direction stepping motor are controlled to rotate based on the relative position of light, so that an infrared laser beam emitted by the laser emitting device is emitted to a central position corresponding to the optical indication information; and in response to determining that the infrared laser beam emitted by the laser emitting device is emitted to the central position, calibration completion information is generated.

In an optional embodiment of the present disclosure, a smart door lock is provided. The smart door lock includes one or more processors and a storage device having one or more programs stored thereon. When the one or more programs are executed by the one or more processors, the one or more processors are caused to implement the method as described above.

The present disclosure relates to a non-transitory computer-readable storage medium. The storage medium has a computer program stored thereon. When the storage program is executed by a processor, the method as described above is implemented.

The above descriptions are merely preferred embodiments of the present disclosure and are not intended to limit the present disclosure. For those skilled in the art, the present disclosure may have various modifications and changes. Any modification, equivalent replacement, improvement, etc., made within the spirit and principle of the present disclosure shall be included within the protection scope of the present disclosure.

## Claims

1. A method for wireless charging, comprising:
detecting a battery capacity of a smart security device, and sending a charging start instruction to a wireless charging device;
determining whether the wireless charging device sends an energy shutoff notification; and
in response to determining that the wireless charging device does not send the energy shutoff notification, executing a security detection task, and sending a charging stop instruction to the wireless charging device according to a detection result corresponding to the security detection task to cause the wireless charging device to stop emitting energy.

2. The method according to claim 1, wherein the detecting a battery capacity of a smart security device, and sending a charging start instruction to a wireless charging device includes:
determining the battery capacity of the smart security device; and
in response to determining that the battery capacity is less than or equal to a first preset battery capacity, sending the charging start instruction to the wireless charging device.

3. The method according to claim 2, wherein the in response to determining that the wireless charging device does not send the energy shutoff notification, executing a security detection task, and sending a charging stop instruction to the wireless charging device according to a detection result corresponding to the security detection task includes:
in response to a switching event of the smart security device triggered by a human body, detecting a switching state of the smart security device; and
in response to determining that the switching state of the smart security device is an on state, sending the charging stop instruction to the wireless charging device.

4. The method according to claim 2, wherein the in response to determining that the wireless charging device does not send the energy shutoff notification, executing a security detection task, and sending a charging stop instruction to the wireless charging device according to a detection result corresponding to the security detection task includes:
receiving at least one of a voltage signal or a current signal sent by the wireless charging device;
determining whether the voltage signal is within a preset voltage range or whether the current signal is within a preset current range; and
in response to determining that the voltage signal is not within the preset voltage range or the current signal is not within the preset current range, sending the charging stop instruction to the wireless charging device.

5. The method according to claim 2, wherein the in response to determining that the wireless charging device does not send the energy shutoff notification, executing a security detection task, and sending a charging stop instruction to the wireless charging device according to a detection result corresponding to the security detection task includes:
determining whether the battery capacity of the smart security device reaches a second preset battery capacity, wherein the second preset battery capacity is greater than the first preset battery capacity; and
in response to determining that the battery capacity reaches the second preset battery capacity, sending the charging stop instruction to the wireless charging device.

6. A method for wireless charging, comprising:
receiving a charging start instruction sent by a smart security device;
in response to receiving the charging start instruction, emitting energy to charge a battery of the smart security device, and performing a human body detection within an energy radiation region corresponding to the energy; and
in response to a human body being detected, stopping emitting the energy, and sending an energy shutoff notification to the smart security device.

7. The method according to claim 6, further comprising:
in response to no human body being detected, determining whether the smart security device sends a charging stop instruction, and in response to determining that the smart security device sends the charging stop instruction, stopping emitting the energy in response to the charging stop instruction.

8. The method according to claim 1, further comprising:
controlling a transmitter to perform a laser start operation based on target wireless charging start information;
performing a current detection on each photoelectric conversion component in a photoelectric conversion component set to obtain a current information set corresponding to the photoelectric conversion component set, wherein each photoelectric conversion component in the photoelectric conversion component set is disposed on the transmitter;
determining whether each piece of current information in the current information set satisfies a preset charging condition; and
in response to determining that each piece of current information in the current information set satisfies the preset charging condition, controlling the transmitter to perform a wireless charging operation on a receiver.

9. The method according to claim 8, further comprising:
in response to determining that each piece of current information in the current information set does not satisfy the preset charging condition, controlling a laser to move to a preset position;
controlling the laser to perform a first movement operation based on a preset movement information sequence, and performing a first real-time current detection on each photoelectric conversion component in the photoelectric conversion component set to obtain first real-time current information corresponding to the photoelectric conversion component set, wherein each piece of preset movement information in the preset movement information sequence includes a preset movement direction and a preset movement distance;
in response to determining that the detected first real-time current information corresponding to any photoelectric conversion component satisfies a preset first real-time charging condition, controlling the laser to perform a second movement operation based on a target movement information sequence, and performing a second real-time current detection on each photoelectric conversion component in the photoelectric conversion component set to obtain second real-time current information corresponding to the photoelectric conversion component set, wherein each piece of target movement information in the target movement information sequence includes a target movement direction and a target movement distance, and the target movement distance included in any target movement information is less than the preset movement distance included in any preset movement information; and
in response to determining that each piece of the detected second real-time current information corresponding to each photoelectric conversion component satisfies a preset second real-time charging condition, controlling the transmitter to perform the wireless charging operation.

10. The method according to claim 9, wherein the in response to determining that the detected first real-time current information corresponding to any photoelectric conversion component satisfies a preset first real-time charging condition, controlling the laser to perform a second movement operation based on a target movement information sequence, and performing a second real-time current detection on each photoelectric conversion component in the photoelectric conversion component set to obtain second real-time current information corresponding to the photoelectric conversion component set includes:
in response to determining that the detected first real-time current information corresponding to any photoelectric conversion component satisfies the preset first real-time charging condition, determining a location identifier corresponding to the any photoelectric conversion component;
determining the target movement information sequence based on the location identifier; and
controlling the laser to perform the second movement operation based on the target movement information sequence, and performing the second real-time current detection on each photoelectric conversion component in the photoelectric conversion component set to obtain the second real-time current information corresponding to the photoelectric conversion component set.

11. The method according to claim 8, wherein after controlling the transmitter to perform the wireless charging operation on the receiver in a case where each piece of current information in the current information set satisfies the preset charging condition, the method further includes:
determining whether an object exists within a target region by performing an object detection on the target region using an object detection sensor, wherein the target region includes a region corresponding to an emission path of the transmitter; and
in response to determining that an object exists within the target region, controlling the transmitter to stop the wireless charging operation.

12. The method according to claim 8, wherein after controlling the transmitter to perform the wireless charging operation on the receiver in a case where each piece of current information in the current information set satisfies the preset charging condition, the method further includes:
in response to that a door unlocking operation corresponding to a smart door lock is detected, controlling the transmitter to stop the wireless charging operation.

13. The method according to claim 8, wherein the controlling a transmitter to perform a laser start operation based on target wireless charging start information includes:
determining whether a remaining battery capacity of a smart door lock is less than or equal to a preset battery capacity warning threshold;
in response to determining that the remaining battery capacity of the smart door lock is less than or equal to the preset battery capacity warning threshold, generating battery capacity warning information based on the remaining battery capacity;
sending the battery capacity warning information to a terminal device; and
in response to receiving the target wireless charging start information sent by the terminal device, controlling the transmitter to perform the laser start operation.

14. The method according to claim 1, further comprising:
detecting whether a preset charging condition is satisfied;
in response to determining that the preset charging condition is satisfied, emitting a laser light to a laser receiving end at an initial emission power;
in response to a first command fed back by the laser receiving end according to power adjustment information, performing a reduction process on an emission power according to a preset adjustment strategy; or
in response to a second command fed back by the laser receiving end according to the power adjustment information, stopping emitting the laser light to the laser receiving end;
wherein the power adjustment information includes at least a current battery capacity of a smart device where the laser receiving end is located.

15. The method according to claim 14, wherein the detecting whether a preset charging condition is satisfied includes at least one of:
detecting whether a position alignment between a laser emitting end and the laser receiving end has been completed;
detecting whether a living being exists within a predetermined region of the laser emitting end; or
detecting whether a current battery capacity of the laser receiving end is lower than a first battery capacity threshold;
wherein the method further comprising:
in a case where the position alignment has been completed, the living being does not exist within the predetermined region, and the current battery capacity is lower than the first battery capacity threshold, determining that the preset charging condition is satisfied.

16. The method according to claim 14, wherein the in response to a first command fed back by the laser receiving end according to power adjustment information, performing a reduction process on an emission power according to a preset adjustment strategy includes:
after receiving the first command, acquiring real-time charging information, historical usage data, and a current user count, wherein the real-time charging information includes a current battery capacity and a current time;
determining a target emission power according to a relationship between the current user count and a preset user count, and emitting the laser light to the laser receiving end at the target emission power; or
determining the target emission power by comparing the current battery capacity and the current time with the historical usage data, and emitting the laser light to the laser receiving end at the target emission power;
wherein the target emission power is lower than the initial emission power.

17. The method according to claim 14, wherein, after emitting the laser light to the laser receiving end based on the initial emission power in a case where the preset charging condition is satisfied, the method further includes:
during emitting the laser light, periodically detecting whether a living being exists within a predetermined region of the laser emitting end according to a preset time period; and
in a case where the living being is detected to exist, stopping emitting the laser light to the laser receiving end.

18. The method according to claim 1, wherein the wireless charging device for smart door lock includes: a wireless emitting device, an infrared laser emitting device, and a laser sensor, the laser sensor is integrated on the smart door lock, an optical component is integrated on a surface of the laser sensor, and before controlling a transmitter to perform a laser start operation based on target wireless charging start information, the method further includes:
in response to receiving a calibration instruction, controlling the infrared laser emitting device to scan a preset region;
in response to determining that the infrared laser emitting device has scanned the optical component, recording a position of the scanned optical component;
controlling the infrared laser emitting device to emit an infrared laser beam to the optical component to obtain optical indication information, and acquiring a relative position of light according to the optical indication information; and
controlling the infrared laser emitting device to rotate based on the relative position of light, so that the infrared laser beam is emitted to a central position corresponding to the optical indication information.

19. An electronic device, comprising:
one or more processors;
a storage device having one or more programs stored thereon;
wherein when the one or more programs are executed by the one or more processors, the one or more processors are caused to implement the method according to any one of claims 1 to 18.

20. A non-transitory computer-readable storage medium, having a computer program stored thereon, wherein when the program is executed by a processor, the method according to any one of claims 1 to 18 is implemented.
